# EUROPEAN PATENT SPECIFICATION

(11) **EP 1 417 272 B1**
(45) Date of publication and mention of the grant of the patent: **20.02.2008**
(21) Application number: 02751133.6
(22) Date of filing: 11.07.2002
(51) Int. Cl.: C09D 167/06, C09D 163/10, C09D 175/16, C09D 177/12

(54) **RADIATION CURABLE POWDER COATING COMPOSITIONS**
STRAHLENHÄRTBARE PULVERLACKZUSAMMENSETZUNGEN
COMPOSITIONS DE REVETEMENT PULVERULENTES DURCISSABLES PAR RAYONNEMENT

(30) Priority: 19.07.2001 EP 01117485
(43) Date of publication of application: 12.05.2004
(73) Proprietor: CYTEC SURFACE SPECIALTIES, S.A., 1070 Bruxelles (BE)
(72) Inventor: MOENS, Luc, B-1640 Sint-Genesius-Rode (BE); MAETENS, Daniel, B-1070 Bruxelles (BE); BUYSENS, Kris, B-9700 Oudenaarde (BE)
(74) Representative: Destryker, Elise Martine
(86) International application number: PCT/EP2002/007742
(87) International publication number: WO 2003/008508

(56) References cited:
- EP-A- 0 719 848
- EP-A- 0 989 143
- WO-A-00/75241
- US-A- 4 000 349
- US-A- 6 005 017

## Description

The present invention concerns radiation curable powder coating compositions comprising at least one ethylenically unsaturated resin and at least one phosphorous containing compound, as well as the preparation and the uses of said compositions.

More particularly, the present invention relates to powder compositions curable by radiations, such as ultraviolet irradiation or accelerated electron beams, the binder of which is composed of at least one ethylenically unsaturated resin and at least one phosphorous containing compound, and which lend themselves to the production of paint and varnish coatings exhibiting an unique combination of properties, inter alia good flow and mechanical properties and above all outstanding adhesion to metal substrates.

Powder coatings, which are dry, finely divided, free flowing solid materials at room temperature, have gained considerable popularity in recent years over liquid coatings.

Despite their many advantages, nowadays thermosetting powder coatings generally are cured at temperatures of at least 140°C. Below this recommended temperature the coatings have poor appearance as well as poor physical and chemical properties. In consequence of this restriction, powder coatings are generally not employed in coating heat-sensitive substrates such as wood and plastic or assembled metallic parts containing heat-sensitive compounds. Heat-sensitive substrates or compounds both demand low curing temperatures, preferably below 140°C, to avoid significant degradation and/or deformation. Low temperature radiation curable powders have recently been proposed as a solution to this problem.

The use of unsaturated resins, eventually in combination with unsaturated oligomers, as a binder for radiation curable powder coatings already is disclosed in prior art.

Today commercial radiation curable powder coatings applied on wood of plastic substrates generally provide satisfactory results. However when used on metal substrates, one of the major problems experienced with radiation curable powder coatings is the poor adhesion of the cured film to the metal surface. It has been postulated that the reason for the poor adhesion properties of such coatings is often the rapid and quick curing of the polymeric material accompanied with some film shrinkage. At the contrary, thermosetting powder coating materials show generally acceptable adhesion properties to metal substrates.

The introduction of metal adhesion promoters in coating systems already is disclosed in patent literature.

US 5,612,093 claims the use of titanium and zirconium complexes of carboxylic acids as corrosion inhibitors in coating compositions. The coatings can be cured at room temperature or by heating or by irradiation depending on whether the binder is composed of a physically, chemically or oxidatively drying resin or of thermosetting or radiation curable resins. In addition to the anticorrosive action, the favourable influence of the titanium and zirconium complexes on the coating-metal adhesion is mentioned.

US 4,163,809 claims for radiation curable coating compositions proving excellent adhesion to metal and containing an adhesion promoter additive of a high glass transition temperature polymeric material containing an ethylenically unsaturated group.

The use of phosphorous containing compounds as an adhesion promoter for structural adhesive compositions is described in US 5,641,834. The structural adhesives thus have the characteristic feature of bonding metal surfaces to a variety of substrates including plastic, reinforced plastics, fibres, glass, ceramics, wood and metal. Yet, nowhere there is prior art, claiming or inciting the use of phosphorous compounds in radiation curable powder coating compositions, for, upon application and curing, getting a good adhesion of the paint film to metal substrates such as measured by the cross-cut test (ASTM D3359).

Moreover, on the one side knowing the good metal adhesion characteristics of thermosetting powder coatings, and on the other hand taking into account the fact that the phosphorous compound containing structural adhesion compositions are room-temperature-curable systems, there is absolute no indication for phosphorous containing compounds granting metal adhesion to powder coatings once they are cured under the influence of irradiation after having being melted by heating.

Though these adhesion promoters remedy the shortcomings of liquid coating systems, whether they are radiation curable or not, till now no solution has been introduced when radiation curable powder coatings are concerned. Yet, when an economical, environmental friendly coating for e.g. assembled metallic parts containing heat-sensitive components, is needed, the application of radiation curable powders only can be considered when good adhesion to different metals and alloys can be guaranteed.

It is accordingly the object of the present invention to provide a powder coating composition, capable of being cured by radiation upon melting, which provides a paint film proving an outstanding adhesion to metal. Moreover, the film upon curing the powder coating composition has an excellent combination of physical properties such as smoothness and flexibility.

It now has been surprisingly found that radiation curable powder coating compositions comprising at least one ethylenically unsaturated resin and at least one phosphorous containing compound exhibit upon melting and curing an excellent combination of physical properties such as smoothness, flexibility and above all an outstanding adhesion to metal substrates even without an extensive metal surface preparation.

Thus the present invention provides a radiation curable powder coating composition which comprises:
(a) 80.0 to 99.5 weight percentage of at least one ethylenically unsaturated resin;
(b) 0.5 to 20.0 weight percentage of at least one phosphorous containing compound selected from the group consisting of phosphoric acid and organic derivates of phosphinic, phosphonic or phosphoric acid, said organic derivate having at least one organic moiety characterised by the presence of at least one unit of ethylenically unsaturation, preferably terminally located; and
(c) 0 to 20.0 weight percentage of at least one ethylenically unsaturated monomer or oligomer,
calculated on the whole composition of (a), (b) and (c).

The ethylenically unsaturated resin (a) of the powder composition of the present invention can be selected from:
(a.1) ethylenically unsaturated group containing amorphous or semi-crystalline polyester resins;
(a.2) ethylenically unsaturated group containing acrylic copolymer;
(a.3) ethylenically unsaturated group containing polyphenoxy resins;
(a.4) ethylenically unsaturated group containing non-aromatic epoxy resins;
(a.5) ethylenically unsaturated group containing polyurethanes;
(a.6) ethylenically unsaturated group containing polyesteramides used alone or as a mixture.

The ethylenically unsaturated monomer or oligomer (c) can be selected from the group consisting of componds having a (meth)acrylate group, an allyl group or a vinyl group, the oligomer himself being derived from polyester, polyether, polycarbonate, polyurethane, acrylic copolymers, etc.

The ethylenically unsaturated polyesters (a.1) of the powder composition of the present invention are derived from hydroxyl or carboxylic acid group terminated polyesters. They can be amorphous or semi-crystalline and are prepared from:
an acid constituent which comprises aliphatic or cycloaliphatic; or aromatic carboxylic polyacids, selected from terephthalic acid, isophthalic acid, phthalic acid, 1,2, cyclohexanedicarboxylic acid, 1,3-cyclohexanedicarboxylic acid, 1,4-cyclohexanedicarboxylic acid, fumaric acid, maleic acid, adipic acid, succinic acid, glutaric acid, adipic acid, pimelic acid, suberic acid, azelaic acid, sebacic acid, 1,12-dodecanedioic acid, trimellitic acid, pyromellitic acid and their anhydrides, alone or as a mixture;
- an alcohol constituent which comprises aliphatic or cycloaliphatic polyols, selected from 1,4-cyclohexanediol, 1,4-cyclohexanedinaethanol, hydrogenated Bisphenol A, 2,2,4,4-tetramethyl-1,3-cyclobutanediol, 4,8-bis(hydroxymethyl)-tricyclo-[5,2,1,0^{2,6}]-decane, ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 2-methyl-1, 3-propanediol, 2-butyl-1, 3-propanediol, neopentyl glycol, hydroxypivalate ester of neopentyl glycol, trimethylolpropane, ditrimethylolpropane, pentaerythritol., alone or as mixture.

These polyesters which are hydroxyl group and/or carboxylic acid group terminated are characterised with an acid number (AN) and/or an hydroxyl number (OHN) ranging from 10 to 100 mg KOH/g and particularly from 25 to 75 mg KOH/g, a number average molecular weight (Mn) from 800 to 14000 and particularly from 1000 to 8000, a glass transition temperature (Tg) from 40 to 85°C when the polyester is amorphous, or a melting temperature from 60 to 150°C and a glass transition temperature of less than 50°C when the polyester is semi-crystalline, a degree of unsaturation ranging from 0 to 4.0 and preferably from O to 2.5 milliequivalents of double bonds per gram of polyester and an ICI cone/plate viscosity of less than 50 000 mPa.s measured at 200°C.

The hydroxyl or carboxyl functional polyesters further can be converted into ethylenically unsaturated polyesters such as (meth)acryloyl group end-capped polyesters for example. At this end, the hydroxyl or carboxyl functional polyesters are made to react with a diisocyanate, an hydroxyalkyl(meth)acrylate and the terminal hydroxyl groups of the polyester or with a glycidyl(meth)acrylate and the terminal carboxyl groups of the polyester. The hydroxyalkyl(meth)acrylate used for reaction with the di-isocyanate in the above reaction is preferably selected from hydroxyethyl(meth)acrylate. 2- or 3-hydroxypropyl(meth)acrylate, 2-,3- and 4-hydroxybutyl(meth)acrylate, etc.

The di-isocyanate used for the reaction with the hydroxyalkyl(meth)acrylate and the hydroxyl group containing polyester in the above reaction is preferably selected from 1-isocyanato-3,3,5-trimethyl-5-isocyanatomethyl-cyclohezcane (isophorondiisocyanate, IPDn, tetramethyl- xylenediisocyanate (TMXDI), hexamethylenediisocyanate (HDI), trimethylhexamethylenedi-isocyanate, 4,4'-diisocyanatodicyclohexylmethane, 4.4'-diisocyanatodiphenylmethane, these technical mixtures with 2,4-diisocyanatodiphenylmethane and also the higher homologues of above mentioned diisocyanates, 2,4-diisocyanatotoluene and technical mixtures of them with 2,6-diisocyanatotoluene, as well as the copolymerisation product of α,α'-dimethyl-meta-isopropenylbenzylisocyanate (TMI).

For the preparation of the polyesters containing hydroxyl and/ or carboxyl groups, use is generally made of a conventional reactor equipped with a stirrer, an inert gas (nitrogen) inlet, a distillation column connected to a water-cooled condenser and a thermometer connected to a thermoregulator.

The esterification conditions used for the preparation of these polyesters can be conventional, namely that it is possible to use an ordinary esterification catalyst e.g. derived from tin, such as dibutyltin oxide, dibutyltin dilaurate or n-dibutyltin trioctoate, or derived from titanium, such as tetrabutyl titanate, in the proportion of e.g. 0 to 1% by weight of the reactants, and optionally to add antioxidants, such as the phenol compounds Irganox 1010 (Ciba) or Ionol CP (Shell) or stabilisers of phosphonite or phosphite type, such as tributyl phosphite or triphenyl phosphite, in the proportion of e.g. 0 to 1% by weight of the reactants.

The polyesterification is generally carried out at a temperature which is gradually increased from 130 to approximately 180 to 250°C, first at normal pressure and then under reduced pressure at the end of each step of the process, these conditions being maintained until a polyester is obtained which exhibits the desired hydroxyl and/or acid number. The degree of esterification is monitored by determination of the amount of water formed during the reaction and of the properties of the polyester obtained, for example the hydroxyl number, the acid number, the molecular weight and/ or the viscosity.

The polyesters containing (meth)acryloyl groups a.1) can be prepared in one of the following ways:

On completion of the above described polycondensation, the hydroxyl or carboxyl functional group containing polyester in the molten state, which is found in the reactor, is allowed to cool to a temperature between 100 and 160°C, and a radical polymerisation inhibitor, such as phenothiazine or an inhibitor of the hydroquinone type, is added in a proportion of e.g. 0.01 to 1% with respect to the weight of the polyester and the nitrogen is replace by an oxygen inlet.

When started from a hydroxyl group containing polyester, a substantially equivalent amount of hydroxyalkyl(meth)acrylate is added thereto. When all the hydroxyalkyl(meth)acrylate is added, an equivalent amount of diisocyanate is slowly added to the mixture. A catalyst for the hydroxyl/isocyanate reaction can optionally be used. Examples of such catalysts include organo-tin compounds (e.g. dibutyltin dilaurate, dibutyltin dimaleate, dibutyltin oxide, stannous octoate, 1,3-diacetoxy-1,1,3,3-tetrabutyl-distanoxane). These catalysts are preferably used in an amount of 0 to 1% with respect to the weight of the polyester.

Otherwise, when started from a polyester containing carboxyl groups, a substantially equivalent amount of glycidyl(meth)acrylate is added thereto. A catalyst for the acid/epoxy reaction can optionally be used. Examples of such catalysts include amines (e.g. 2-phenylimidazoline), phosphines (e.g. triphenylphosphine), ammonium salts (e.g. tetrabutylammonium bromide or tetrapropylammonium chloride), phosphonium salts (e.g. ethyltriphenylphosphonium bromide or tetrapropylphosphonium chloride). These catalysts are preferably used in an amount of 0.05 to 1% with respect to the weight of the polyester. The degree of progression of the reaction is monitored by determination of the properties of the polyester obtained, for example the hydroxyl number, the acid number, the degree of unsaturation and/ or the content of free glycidyl(meth)acrylate or hydoxyalkyl(meth)acxylate.

The ethylenically unsaturated polyesters according to the present invention thus contain in chain insaturations or end-standing unsaturated groups or both.

The ethylenically unsaturated polyesters exhibit following characteristics:
- a number average molecular weight (Mn) from 1100 to 16000, preferably between 1300 and 8500 measured by gel permeation chromatography (GPC)
- a degree of unsaturation from 0.17 to 4.00, particularly of 0.35 to 2.50 milliequivalents of double bonds per gram of polyester
- an ICI cone/plate melt viscosity of less than 50 000 mPa.s at 200°C when the polyester is amorphous and of less than 10 000 mPa.s at 175°C when the polyester is semi-crystalline, measured according to ASTM D4287
- a glass transition temperature (Tg) from 35 to 80°C when the polyester is amorphous, or a melting temperature from 60 to 150°C and a glass transition temperature of less than 50°C when the polyester is semi-crystalline, as determined by differential scanning calorimetry (DSC) according to ASTM D3418

The ethylenically unsaturated acrylic copolymers (a.2) of the powder composition of the present invention are prepared from the reaction of ethylenically unsaturated monomers having functional groups with an acrylic copolymer having functional groups being capable of reacting with the functional groups of the ethylenically unsaturated group containing monomers.

The acrylic copolymer having reactable functional groups is composed of from 40 to 95% mole of at least one acrylic or methacrylic monomer, from 0 to 60% mole of at least one other ethylenically unsaturated monomer and from 5 to 60% mole of an ethylenically unsaturated monomer having functional groups selected from epoxy, carboxyl, hydroxyl or isocyanate groups.

The ethylenically unsaturated acrylic copolymer (a.2) of the powder composition of the present invention is prepared accordingly a two step process.

In a first step the acrylate copolymer is prepared in a conventional polymerisation process, such as polymerisation in bulk, in emulsion, or in solution in an organic solvent, in which a certain portion of functional monomer is copolymerised to obtain a functionalised acrylate copolymer. This functional monomer, which is usually present in amounts of between 5 and 60% mole, is preferably an epoxy - functional monomer, for example on the basis of glycidyl (meth)acrylate. However, acid-functional monomers, for example on the basis of (meth)acrylic acid, hydroxyl-functional monomers, for example on the basis of hydroxyethyl (meth)acrylate, or isocyanate-functional monomers, for example on the basis of TMI (benzene, 1-(1-isocyanato-1-methylethyl)-4-(1-methylethenyl)) from American Cyanamid or MOI (2-isocyanatoethylmethacrylate) from Showa Denko.

The monomers are copolymerised in the presence of free-radical initiator such as benzoyl peroxide, tert.-butyl peroxide, decanoyl peroxide, azo-bis-isobutyronitrile, and the like, in an amount of from 0.1 to 5% by weight of the monomers. Useful monomers for the preparation of the acrylic copolymer are methyl(meth)acrylate, ethyl(meth)acrylate, propyl(meth)acrylate, n-butyl(meth)acrylate, isobutyl(meth)acrylate, tert.-butyl(meth)acrylate, 2-ethylhexyl(meth)acrylate, stearyl(meth)acrylate, tridecyl(meth)acrylate, cyclohexyl(meth)acrylate, benzyl(meth)acrylate, benzyl(meth)acrylate, phenyl(meth)acrylate, dimethylaminoethyl(meth)acrylate, diethylaminoethyl(meth)acrylate, polysiloxane (meth)acrylate and caprolactone(meth)acrylate. These monomers usually are present in amounts between 40 and 95% mole.

Other copolymerisable monomers, which can be present in amounts between 0 and 60% mole, are for example styrene, α-methylstyrene, vinyltoluene, acrylonitrile, methacrylonitril, vinyl acetate, vinyl propionate, acrylamide, methacrylamide, methylolmethacrylamide, vinylchloride, ethylene, propylene and C4-20 α-olefins.

In the second step an addition reaction is carried out between the functionalised monomer of the acrylate copolymer obtained from the first step and a methacrylate ester group containing compound that can react with said functional monomer. The compound that can react respectively is for example (meth)acrylic acid. (β-methyl)glycidyl(meth)acrylate, MOI, hydroxyethyl (meth)acrylate, maleic anhydride, allylglycidylether, hydroxybutylvinylether, allylalcohol.

The addition reaction of the second step can be done either in bulk or in solvent. Typical solvents are toluene, xylene, n-butylacetate, etc. The compound containing an unsaturated group that can react with the functionalised acrylate polymer is added at temperatures between 50 and 150°C. The mixture is stirred for several hours. The progress of the reaction is followed by titration.

The ethylenically unsaturated acrylic copolymer (a.2) of the powder composition of the present invention exhibit following characteristics:
- a number average molecular weight (Mn) from 1000 to 8000 and preferably between 2000 and 6000 measured by GPC
- a degree of unsaturation from 0.35 to 3.50 and preferably from 0.5 to 2.5 milliequivalents of double bounds per gram of acrylic copolymer
- an ICI cone/plate melt viscosity of less than 50 000 mPa.s measured at 200°C according to ASTM D4287
- a glass transition temperature (Tg) from 45 to 100°C as determined by DSC according to ASTM D3418

The ethylenically unsaturated group containing polyphenoxy resin (a.3) of the powder composition of the present invention is obtainable from the reaction of, for example, (meth)acrylic acid with a glycidyl group containing polyphenoxy resin such as Bisphenol A based epoxy resins or the phenol or cresol epoxy novolacs, such as described, for example, in EP 00102704.

For the preparation of a (meth)acryloyl group containing polyphenoxy resin (a.3), use is generally made of a conventional reactor equipped with a stirrer, an inlet for oxygen, an inlet for (meth)acrylic acid and a thermometer connected to a thermoregulator. To the epoxy resin standing at a temperature between 100 and 150°C, a radical polymerisation inhibitor is added in a proportion of e.g. 0.01 to 1 % with respect to the weight of the epoxy resin. A substantial equivalent amount of (meth)acrylic acid is than slowly added to the molten epoxy resin. A catalyst for the acid/ epoxy reaction can optionally be used. Examples of such catalysts include amines (e.g. 2-phenylimidazoline), phosphines (e.g. triphenylphosphine), ammonium salts (e.g. tetrabutylammonium bromide or tetrapropylammonium chloride), phosphonium salts (e.g. ethyltriphenylphosphonium bromide or tetrapropylphosphonium chloride). These catalysts are preferably used in an amount of 0.05 to 1% with respect to the weight of the epoxy resin.

The degree of progression of the reaction is monitored by determination of the properties of the (meth)acryloyl group containing polyphenoxy resin obtained, such as acid number, hydroxyl number and the degree of unsaturation.

The (meth)acryloyl group containing polyphenoxy resins (a.3) incorporated in the compositions in accordance with the present invention, preferably exhibit a degree of unsaturation of 0.2 to 6.0, particularly of 0.5 to 4.5 milliequivalents of double bonds per gram of resin, and in a specifically preferred embodiment additionally exhibit the following characteristics:
- a number average molecular weight (Mn) from 500 to 5000, preferably between 650 and 3500, measured by gel permeation chromatography (GPC)
- a glass transition temperature (Tg) determined by differential scanning calorimetry (DSC) according to ASTM D3418, from 30 to 80°C
- a viscosity in the molten state measured at 200°C with a cone/plate viscometer (known under the name of ICI viscosity) according to ASTM D4287, of less than 25 000 mPa.s.

The ethylenically unsaturated group containing non-aromatic epoxy resin (a.4) of the powder composition of the present invention is obtainable from the reaction of, for example, (meth)acrylic acid with a glycidyl group containing non-aromatic resin such as the aliphatic hydrogenated Bisphenol A based epoxy resins.

The terminology "non-aromatic" is intended to include aliphatic, cycloaliphatic, eventually unsaturated compounds.

For the preparation of the (meth)acryloyl group containing non-aromatic epoxy resins, an identical procedure is followed as for the preparation of the (meth)acryloyl group containing polyphenoxy resin.

The ethylenically unsaturated non-aromatic epoxy resins (a.4) of the powder composition of the present invention exhibit following characteristics
- a number average molecular weight (Mn) from 450 to 5000, preferably between 1000 and 3500. measured by gel permeation chromatography (GPC)
- a degree of unsaturation from 0.4 to 4.5 and preferably from 0.5 to 2.5 milliequivalents of double bounds per gram of unsaturated resin
- a glass transition temperature (Tg) determined by differential scanning calorimetry (DSC) according to ASTM D3418, from 30 to 80°C
a viscosity in the molten state measured at 200°C with a cone/plate viscometer (known under the name of ICI viscosity) according to ASTM D4287, of less than 20 000 mPa.s.

The ethylenically unsaturated group containing polyurethanes (a.5) of the powder composition of the present invention are derived from a diisocyanate compound, a polyol and an unsaturated hydroxy containing compound. The polyol used for the preparation of the (meth)acryloyl group containing polyurethanes are chosen among the C2 - C15 aliphatic or cycloaliphatic diols, polyester polyols or polyether polyols.

Examples of C2 - C15 aliphatic or cycloaliphatic diols are ethylene glycol, 1,3-propanediol, 1.4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 2-methyl-1,3-propanediol, neopentyl glycol, 2-butyl-2-methyl-1,3-propanediol, hydroxypivalate ester of neopentyl glycol, 1,4-cyclohexanediol, 1,4-cyclohexanedimethanol, hydrogenated Bisphenol A, 2,2,4,4-tetramethyl-1,3-cyclobutanediol, 4,8-bis(hydroxymethyl)-tricyclo-[5,2,1,02,6]-decane.

The polyester polyols, characterised by number average molecular weight (Mn) from 8200 to 4000, are prepared from a stoichiometric excess of an aliphatic or cycloaliphatic polyol with an aromatic, aliphatic or cycloaliphatic polyacid, the polyacids and the polyols being selected among those recited earlier for the preparation of the (meth)acryloyl group containing polyesters of polyesteramides.

Examples of the polyether polyols are polyoxyethylene glycol, polyoxypropylene glycol, polyoxybutylene glycol, polytetramethylene glycol, block copolymers, for example, combinations of polyoxypropylene and polyoxyethylene glycols, poly-1,2-oxybutylene and polyoxyethylene glycols, poly-1,4-tetramethylene and polyoxyethylene glycols, and copolymer glycols prepared from blends or sequential addition of two or more alkylene oxides. The polyalkylene polyether polyols may be prepared by any known process such as, for example, the process disclosed in Encyclopaedia Technology, Vol. 7, pp. 257 - 262, published by Interscience Publishers, Inc. (1951).

Examples of polyisocyanates that can be used for the preparation of the (meth)acryloyl group containing polyurethanes of the present invention are 1-isocyanato-3,3,5-trimethyl-5-isocyanatomethylcyclohexane (isophorondiisocyanate, EPDI), tetramethylxylenediisocyanate (TMXDI), hexamethylenediisocyanate (HDI), trimethylhexamethylenediisocyanate, 4,4'-diisocyanatodicyclohexylmethane, 4,4'-diisocyanatodiphenylmethane, these technical mixtures with 2,4-di-isocyanatodiphenylinethane and also the higher homologues of above mentioned diisocyanates, 2,4-di-isocyanatotoluene and technical mixtures of them with 2.6-diisocyanatotoluene, as well as the copolymerisation product of α,α'-dimethyl-meta-isopropenyl-benzylisocyanate (TMI).

The hydroxyalkyl(meth)acrylate used for the preparation of the (meth)acryloyl group containing polyurethanes are hydroxyalkylesters of acrylic or methacrylic acid preferably having 2 to 4 carbon atoms in the hydroxyalkyl group such as hydroxyethyl(meth)acrylate. 2- and 3-hydroxypropyl(meth)acrylate and 2-, 3- and 4-hydroxybutyl(meth)acrylate. Preparation of the polyurethanes by reacting the above mentioned starting components may be carried out in inert solvents such as acetone, ethyl acetate, butyl acetate or toluene, preferably at reaction temperatures of 20 to 100°C. The reaction is preferably carried out by reacting the polyisocyanate with the hydroxyalkyl(meth)acrylate in a first reaction step and then reacting the resulting reaction product with the polyol.

The reaction may be accelerated by the use of suitable catalysts such as tin octoate, dibutyltin dilaurate or tertiary amines such as dimethylbenzylamine. The polyurethane or urethane acrylate obtained as the reaction product may be protected against premature, unwanted polymerisation by the addition of suitable inhibitors and antioxidants such as phenols and/or hydroquinones in quantities of 0.001 to 0.300% by weight, based on the polyurethane. These auxiliary agents may be added before, during and/or after the reaction which results in the polyurethane.

The (meth)acryloyl group containing polyurethanes of the present invention are characterised by a number average molecular weight (Mn) from 800 to 15 000 and preferably from 1 300 to 8 500, a glass transition temperature (Tg) from 40 to 100°C, a degree of unsaturation ranging from 0.15 to 0.20 and preferably from 0.35 to 1.50 milliequivalents of double bonds per gram of polyurethanes and an ICI cone/plate viscosity of less than 100.000 mPas measured at 200° C.

The ethylenically unsaturated group containing polyesteramides (a.6) of the present invention are prepared from the reaction of glycidyl(meth)acrylate with a carboxyl group terminated polyesteramide, said polyesteramide being prepared from the reaction of a carboxyl group terminated polyester with a diamine.

The carboxyl group terminated polyesters used for the synthesis of the polyesteramides are prepared from aliphatic, cycloaliphatic or aromatic polyacids used in a mixture or alone, and aliphatic or cycloaliphatic polyols used in a mixture or alone, both, the polyacids and the polyols being selected among these examples as recited earlier for the preparation of the (meth)acryloyl group containing polyesters.

Examples of the diamines which can be used, either alone or in combination, for the preparation of the polyesteramides are selected from ethylenediamine. 1,3-propanediamine, 1,5-pentanediamine, 1,6-hexanediamine, 1,2-cyclohexanediamine, 1,3-cyclohexanediamine, 1,4-cyclohexanediamine, 2,2-dimethyl-1,3-propanediamine, N-(2-aminoethyl)-1,2-ethane-diamine, 3,3'-dimethyl-4,4'-diaminodicyclohexylmethane. 4,4'-diaminodicyclohexyhnethane, 3,3'-dimethyl-4,4'-diaminodiphenylmethane, 4,4'-diaminodiphenylmethane and analogous compounds.

The polyesteramides used for the preparation of the (meth)acryloyl group containing polyesteramides are prepared accordingly a two or more step procedure process as claimed in US 5,306,786.

On completion of the synthesis of the carboxylic acid group containing polyesteramide, a substantially equivalent amount of glycidyl(meth)acrylate is added thereto, accordingly a procedure as described above for the preparation of the meth)acryloyl group containing polyesters starting from the carboxylic acid group functional polyester, to end up with a (meth)acryloyl group containing polyesteramide characterised by a number average molecular weight (Mn) from 800 to 16 000 and preferably from 1 300 to 8 500, a glass transition temperature (Tg) from 40 to 70°C when the polyester is amorphous, a degree of unsaturation ranging from 0.15 to 2.00 and preferably from 0.35 to 1.50 milliequivalents of double bonds per gram of polyester and an ICI cone/plate viscosity of less than 50 000 mPa.s measured at 200°C.

The ethylenically unsaturated resins (a.1), (a.2), (a.3), (a.4) (a.5) and (a.6) of the powder composition of the present invention are used alone or in a mixture comprising one or more resins (a) of one type or a combination of two or more types (a.1) or (a.2) or (a.3) or (a.4) or (a.5) or (a.6).

Besides, up to 20% weight and preferably up to10% weight of the monomer or low molecular weight ethylenically unsaturated oligomer (c) may be added to the composition. The monomers are selected from the tri(meth)acrylate of tris(2-hydroxyalkyl)isocyanurate, such as triacrylate of tris(2-hydroxyethyl)isocyanurate, triallyl(iso)cyanurate, or diallyl phthalate. Oligomers which can be used are polyurethane oligomers having vinylether and/or allylether and/or (meth)acrylate ester end-groups and optionally a polyether, polyester or polycarbonate backbone, prepared from the reaction of respectively hydroxyalkylvinylether, hydroxyalkylallylether, allylalcohol or hydroxyalky(meth)acrylate with a polyisocyanate and optionally a hydroxyl functional oligomer, this oligomer being a polyether, polyester or polycarbonate. Other oligomers which can be used are allyl ether-ester group containing oligomers, such as the ester of trimethylolpropane diallylether or pentaerythritol triallylether and a polycarboxylic acid or anhydride, for example the trimethylolpropane diallylether diester and triester of trimellitic anhydride or the pentaerythritol triallylether diester of adipic acid. Vinylether group containing oligomers can also be used, such as butylvinylether, cyclohexyldimethanol divinylether, butyldivinylether, hydroxyvinylether, triethyleneglycoldivinylether. Finally, hyperbranched unsaturated oligomers can also be used. This type of oligomers, particularly those of the polyester type, are well described in US 6,114,489.

The phosphorous containing compound (b) of the powder composition of the present invention is selected from the group consisting of phosphoric acid and organic derivatives of phosphinic acid, phosphonic acid and phosphoric acid, said organic derivatives having at least one organic moiety characterised by the presence of at least one functional group. preferably terminally located. Such organic derivatives can be saturated or unsaturated, and preferably have at least one organic moiety characterised by the presence of at least one unit of olefinic unsaturation. More particularly, such phosphorus containing compounds have the characteristic formulae: 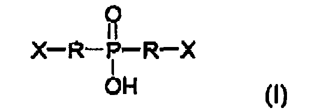 wherein each R is the same or different, and each R is independently a divalent organic radical directly bonded to the phosphorus atom through a carbon-phosphorus bond, said divalent radical being selected from the group consisting of divalent unsubstituted organic radical and divalent organic radical having at least one substituent group selected from the class consisting of halogen, hydroxyl, amino, alkyl radical containing from 1 to 8, preferably 1 to 4 carbon atoms and aryl radical having at least one moiety containing at least one aromatic nucleus; and wherein each X is the same or different, and each X is Independently a functional group selected from the class consisting of hydrogen, hydroxyl, amino, mercapto, halogen and CH₂=C<; 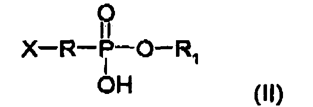 wherein R and X are as previously defined; and R₁ is hydrogen or -R₂X₁ wherein R₂ is a divalent organic radical directly bonded to the oxygen radical through a carbon-oxygen bond, said divalent radical R₂ being selected from the group consisting of divalent unsubstituted organic radical and divalent organic radical having at least one substituent group selected from the class consisting of halogen, hydroxyl, amino, alkyl radical containing from 1 to 8, preferably 1 to 4 carbon atoms and aryl radical having at least one moiety containing at least one aromatic nucleus and X is a previously defined; and 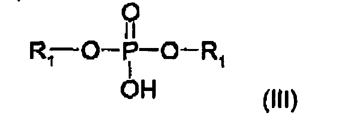 wherein R₁ is as previously described.

A currently preferred group of the phosphorous containing compound has the formulae: 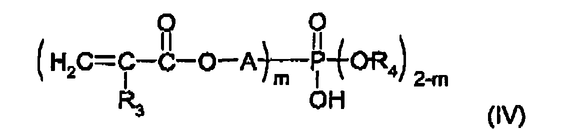 wherein R₃ is selected from the group consisting of hydrogen, halogen, an alkyl group having from 1 to 8, preferably 1 to 4 carbon atoms, and CH₂=CH-; R₄ is selected from the group consisting of hydrogen, an alkyl group having from 1 to 8, preferably 1 to 4 carbon atoms, and a haloalkyl group having from 1 to 8, preferably 1 to 4 carbon atoms; A is selected from the group consisting of -R₅O- and -(R₆O)ₙ, wherein R₅ is an aliphatic or cycloaliphatic alkylene group containing from 1 to 9, preferably 2 to 6 carbon atoms; R₆ is an alkylene group having from 1 to 7, preferably 2 to 4 carbon atoms; n is an integer from 2 to 10, and m is 1 or 2, preferably 1.

In the several formulae I - IV, the divalent organic radicals R and R₂ can have a compound structure, that is, the radical can contain at least one, or a series of at least two, unsubstituted or substituted hydrocarbon group(s) containing or separated from each other by -O-, -S-, -COO-, -NH-, -NHCOO-, and -(R₇O)ₚ, wherein R₇ is an alkylene group containing from 2 to 7, preferably 2 to 4 carbon atoms, and p is an integer from 2 to 10. Preferably, the divalent radical is an alkylene radical having a straight chain or ring of from 1 to 22. preferably 1 to 9 carbon atoms in any non-repeating unit It will be understood that divalent radicals having a compound structure would have two or more of such straight chains or rings. The divalent radicals can be saturated or unsaturated; aliphatic, cycloaliphatic or aromatic; and, with compound structures, can include mixtures thereof, and generally have from 1 to about 22 carbon atoms in each chain or ring of carbon atoms.

In the several formulae I - III, representative X-R and X-R2- radicals include, without limitation thereto, lower alkenyl, cyclohexenyl, hydroxy-lower alkenyl, halo-fower alkenyl, carboxy-lower alkenyl, lower alkyl, amino-lower alkyl, hydroxy-lower alkyl, mareapto-lower alkyl, alkoxy-lower alkyl, halo-lower alkyl, diphosphonomethyl-amino4ower alkyl, phenylhydroxyphosphonomethyl, aminophenylhydroxy phosphonomethyl, halophenylhydroxyphosphonomethyl, phenylaminophosphonomethyl, halophenylaminophosphonomethyl, hydroxyphosphonomethyl, lower alkylhydroxyphosphonomethyl, halo-lower alkylhydroxyphosphonomethyl, and amino-lower alkylhydroxyphosphonomethyl; the term "lower" referring to a group containing from 1 to 8, preferably 1 to 4 carbon atoms.

Representative phosphorus containing compounds include, without limitation, phosphoric acid, 2-methaoryfoyloxyethylphosphate, bis(2-methacxyloyloxyethyl)phosphate, 2-acryloyloxyethylphosphate, bis(2-acryloyloxyethyl)phosphate, methyl-(2-methacryloyloxyethyl)phosphate, ethylmethacryloyloxyethylphosphate, methylacryloyloxyethylphosphate, ethylacryloyloxyethylphosphate; compounds of formula IV wherein R3 is hydrogen or methyl and R4 is propyl, isobutyl, ethylhexyl, halopropyl, haloisobutyl or haloethylhexyl, vinly phosphonic acid, cyclohexene-3-phosphonic acid, α-hydroxybutene-2-phosphonic acid, 1-hydroxy-1-phenylmethane-1,1-diphosphonic acid, 1-hydroxy-1-methyl-1,1-diphosphonic acid, 1-amino-1-phenyl-1,1-diphosphonic acid, 3-amino-1-hydroxypropane-1,1-diphosphonic acid, amino-tris(methylenephosphonic acid), γ-aminopropylphosphonic acid, γ-glycidoxypropylphosphonic acid, phosphoric acid-mono-2-amonoethyl ester, allyl phosphonic acid, allyl phosphinic acid, β-methacryloyloxyethylphosphonic acid, diallylphosphonic acid, bis(β-methacryloyloxyethyl)phosphonic acid and allyl methacryloyloxyethylphosphonic acid. The amorphous and/or semi-crystalline polyesters (a.1) and/or the acrylic copolymers (a.2) and/or the polyphenoxy resins (a.3) and/or the aliphatic epoxy resins (a.4), and/or the polyurethane resin (a. 5) and/or the polyesteramide resin (a.6), all containing ethylenically unsaturated groups, the phosphorous group containing compound (b) and the optionally ethylenically unsaturated monomer or oligomer (c) all described above, intended to be used as binders in the preparation of powder compositions curable by UV radiation or by accelerated electron beams, it being possible for the said compositions to be used in particular as varnishes and paints which e.g. lend themselves to application according to the technique of deposition by means of a triboelectric or electrostatic spray gun or according to the technique of deposition in a fluidised bed. The radiation curable powder compositions can be used as varnishes or paints as such or, if desired, the compositions can be used to prepare the varnishes or paints by adding, further constituents conventionally used in the preparation of powder varnishes and paints.

Therefore, the present invention also relates to the powder varnish or paint obtained using these compositions.

Finally, the present invention also relates to a process for coating an article more particularly a metal article comprising the application to the said article of a radiation curable powder composition in accordance with the invention by deposition such as by spraying with a triboelectric or electrostatic spray gun or by deposition in a fluidised bed, followed by the melting of the coating thus obtained such as by heating at a temperature of 80 to 150°C for a time of e.g. approximately 0.5 to 10 minutes and by the curing of the coating in the molten state by UV irradiation or by accelerated electron beams.

For the radiation curing of the powder compositions in accordance with the invention with accelerated electron beams, it is not necessary to use a photo-initiator, seeing that this type of radiation provides by itself alone a production of free radicals which is sufficiently high for the curing to be extremely rapid. In contrast, when it concerns the photo-curing of the powder composition according to the invention with radiation where the wavelengths are between 200 and 600 nm (UV radiation), the presence of at least one photo-initiator is essential. The photo-initiators which can be used according to the present invention are chosen from those commonly used for this purpose.

The appropriate photo-initiators which can be used, are aromatic carbonyl compounds, such as benzophenone and its alkylated or halogenated derivatives, anthraquinone and its derivatives, thioxanthone and its derivatives, benzoin ethers, aromatic or non-aromatic alphadiones, benzil dialkyl acetals, acetophenone derivatives and phosphine oxides.

Photo-initiators which may suitable, are, for example, 2.2'-diethoxylacetophenone, 2- ,3- or 4-bromoacetophenone, 2,3-pentanedione, hydroxycyclohexylphenylketone, benzaldehyde, benzoin, benzophenone, 9,10-dibromoanthracene, 2-hydroxy-2-methyl- 1-phenylpropan-1-one, 4,4'-dichlorobenzophenone, xanthone, thioxanthone, benzildimethylketal, diphenyl(2.,4,6trimethylbenzyl)phosphine oxide, and the like. It may be optionally advantageous to use a photo-activator, such as tributylamine, 2-(2-aminoethylamino)ethanol, cyclohexylamine, diphenylamine, tribenzylamine or aminoacrylates such as, for example, the addition product of a secondary amine, such as dimethylamine, diethylamine, diethanolamine, and the like, with a polyol polyacrylate, such as the diacrylate of trimethylolpropane, 1,6-hexanediol, and the like. The powder compositions in accordance with the invention can contain 0 to 15 and preferably 0.5 to 8 parts of photo-initiators for 100 parts by weight of the binder in the composition in accordance with the invention.

The radiation curable powder compositions and powder varnishes or paints, respectively, in accordance with the invention can also contain various additional substances conventionally used in the manufacture of powder paints and varnishes. The additional substances optionally added to the radiation-curable powder compositions in accordance with the invention, e.g. to prepare the powder varnishes or paints are, inter alia, compounds which absorb UV radiation, such as Tinuvin 900 (Ciba), light stabilisers based on sterically hindered amines (for example Tinuvin 144 from Ciba), fluidity-regulating agents such as Resiflow PV5 (Worlee), Modaflow (Monsanto), Acronal 4F (BASF) or Crylcoat 109 (UCB), degassing agents such as benzoin and the like.

To the radiation-curable powder composition according to the present invention, further can be added a variety of coating properties modifying substances such as polytetrafluoroethylene modified polyethylene waxes (e.g. Lanco Wax TF 1830 from Lubrizol), polyethylene waxes (e.g. Ceraflour 961 from BYK Chemie), polypropylene waxes (e.g. Lanco Wax PP1362 from Lubrizol), polyamide waxes (e.g. Orgasol 3202 D NAT from ELF Atochem), organosilicones (e.g. Modarez S304P from Protex), etc., or blends of them. These modifying substances are optionally added from 0 to 10 parts for 100 parts by weight of the binder in the composition according to the invention. A variety of pigments and inorganic fillers can also be added to the radiation curable powder compositions in accordance with the invention. Mention will be made, as examples of pigments and fillers, of metal oxides, such as titanium oxide, iron oxide, zinc oxide, and the like, metal hydroxides, metal powders, sulphides, sulphates, carbonates, silicates such as, for example, aluminium silicate, carbon black, talc, kaolins, barytes, iron blues, lead blues, organic reds, organic maroons, and the like.

These additional substances are used in the usual amounts, it being understood that if the radiation curable powder compositions in accordance with the present invention are used as varnishes, the addition of additional substances having opacifying properties should be omitted.

For the preparation of the radiation curable powder compositions of the present invention the amorphous and/or semi-crystalline polyester (a.1) and/or the acrylic copolymer (a.2) and/or polyphenoxy resin (a.3) and/or the aliphatic epoxy resin (a.4) and/or the polyurethane resin (a.5) and/or the polyesteramide (a.6), all containing ethylenically unsaturated groups, the phosphorous containing compound (b), the optional ethylenically unsaturated monomer or oligomer (c), optionally the photo-initiator, optionally the various additional substances conventionally used for the manufacturing of powder paints and varnishes, and optionally the coating properties modifying substances are dry mixed, for example in a tumbler mixer. The mixture is then homogenised at a temperature ranging from 60 to 150°C in an extruder, for example in a Buss Ko-Kneter single screw extruder or a twin screw extruder of wemer-Pfleiderer, APV-Baker or Prism type. The extrudate is then allowed to cool, is ground and sieved in order to obtain a powder in which the size of the particles is preferably between 10 and 150 µm.

Alternatively, to the ethylenically unsaturated resin (a.1) and/or (a.2) and/or (a.3) and/or (a.4) and/or (a.5) and/or (a.6) once prepared and still in the molten stage can be added as a solid or in the liquid stage the other ethylenically unsaturated resin (a.1) and/or (a.2) and/or (a.3) and/or (a.4) and/or (a.5) and/or (a.6), the phosphorous containing compound (b) and/or the ethylenically unsaturated monomer or oligomer (c), thus constituting the binder of the powder composition of the present invention. Otherwise the ethylenically unsaturated resin (a. 1) and/or (a.2) and/or (a.3) and/or (a.4) and/or (a.5) and/or (a.6) once prepared and still in the molten stage can be used as a solvent for the preparation of the other ethylenically unsaturated resin (a.1) and/or (a.2) and/or (a.3) and/or (a.4) and/or (a.5) and/or (a.6) and/or the ethylenically unsaturated monomer or oligomer (c) and the phosphorous containing compound (b), thus building up the binder of the powder composition of the present invention. To the binder thus obtained optionally the photo-initiator, optionally the various additional substances conventionally used for the manufacturing of powder paints and varnishes and optionally the coating-property-modifying substances are mixed as described above.

Instead of the above methods, it is also possible to dissolve/suspend the different unsaturated constituents of the binder system of the present invention, optionally the photo-initiator, and the various additional substances in a solvent such as dichloromethane, to grind in order to obtain a homogeneous suspension containing approximately 30% by weight of solid matter and subsequently to evaporate the solvent, for example by spray drying at a temperature of approximately 50°C, according to methods known per se.

The powder paints and varnishes thus obtained, are entirely suitable for application to the article to be coated by conventional techniques, that is to say by the well-known technique of e.g. deposition in a fluidised bed or by application with a triboelectric or electrostatic spray gun.

After having been applied to the article concerned, the coatings deposited are heated e.g. in a forced circulation oven or by means of infrared lamps at a temperature of 80 to 150°C for a time of e.g, approximately 0.5 to 10 minutes for the purpose of obtaining the melting and the spreading of the powder particles as a smooth, uniform and continuous coating at the surface of the said article. The molten coating is then cured by radiation, such as UV light emitted, for example, by medium pressure mercury vapour UV radiators, of preferably at least 80 to 250 W/linear cm, or by any other well-known source of the state of the art, at a distance of e.g. approximately 5 to 20 cm and for a time sufficient to cure the coating, such as 1 to 60 seconds.

The molten coating can also be cured with accelerated electron beams of preferably at least 150 keV. the power of the devices employed being a direct function of the thickness of the composition layer to be cured by polymerisation. The radiation curable powder coatings of the invention can also be used as dispersions in water, as is known in the art.

The invention is also concerned by articles partially or entirely coated by the coating processes.

The radiation curable powder compositions in accordance with the invention though they can be applied to the most diverse substrates, such as, for example, paper, cardboard, wood, fibre board, textiles, plastics, such as polycarbonates, poly(meth)acrylates, polyolefins, polystyrenes, poly(vinylchloride)s, polyesters, polyurethanes, polyamides, copolymers such as acrylonitrile-butadiene-styrene (ABS) or cellulose acetate butyrate, ant the like, and more particularly are designed for their application on metal substrates of different nature such as e.g. copper, aluminium, steel, etc. even without an extensive metal surface preparation. The substrate may have been pre-treated with another coating, such as a primer for example.

The examples which will follow, illustrate the invention without limiting it. Except when otherwise indicated, the parts mentioned throughout the description and in the examples are parts by weight.

### Example 1

### Step 1

A mixture of 369.7 parts of neopentyl glycol, 10.2 parts of trimethylolpropane along with 2.1 parts of n-butyltin trioctoate catalyst is placed in a conventional four-neck round bottom flask.

The flask contents are heated while stirring, under nitrogen to a temperature of circa 140°C. Thereupon 528.7 parts of terephthalic acid along with 27.8 parts of adipic acid are added while stirring and the mixture is gradually heated to a temperature of 230°C. Distillation starts from about 190°C. After about 95% of the theoretical quantity of water is distilled and a transparent prepolymer is obtained, the mixture is cooled down to 200°C.

The hydroxyl functionalised prepolymer thus obtained, is characterised by:
- AN=: 10 mg KOH/g
- OHN=: 51 mg KOH/g

### Step 2

To the first step prepolymer standing at 200°C. 96.5 parts of isophthalic acid are added. Thereupon the mixture is gradually heated to 225°C After a two-hour period at 225°C and when the reaction mixture is transparent, 0.8 parts of tributylphosphite are added and a vacuum of 50 mm Hg is gradually applied.

After 3 hours at 225°C and 50 mm Hg, following characteristics are obtained:
- AN=: 37 mg KOH/g
- OHN=: 2 mg KOH/g
- ICI200°C=: 5400 mPa.s

### Step 3

The carboxyl functionalised polyester is cooled down to 150°C and 0.9 parts of di-t-butylhydroquinone along with 4.6 parts of ethyltriphenylphosphonium bromide are added. Subsequently 77.3 parts of glycidylmethacrylate is slowly added (30 minutes) while stirring under oxygen. An hour after the addition is ended, a methacryloyl unsaturated polyester with the following characteristics is obtained
- AN=: 5 mg KOH/g
- OHN=: 39 mg KOH/g
- unsaturation=: 1.5 meq/g
- ICI200°C=: 3800 mPa.s
- Tgquenched (DSC, 20°/min)=: 56°C
- Mn (GPC)=: 4000

### Example 2

A mixture of 372.8 parts of neopentyl glycol, 10.2 parts of trimethylolpropane along with 2.3 parts of n-butyltin trioctoate catalyst is placed in a conventional four-neck round bottom flask as in example 1.

The flask contents are heated while stirring, under nitrogen to a temperature of circa 140°C. Thereupon 661.8 parts of isophthalic acid is added while stirring and the mixture is gradually heated to a temperature of 230°C. Distillation starts from about 190°C. When the distillation under atmospheric pressure stops, a vacuum of 50 mm Hg is gradually applied. After 3 hours at 230°C and 50 mm Hg, following characteristics are obtained:
- AN=: 38 mg KOH/g
- OHN=: 3 mg KOH/g

Subsequently the carboxyl functionalised polyester is cooled down and the methacrylation is carried out accordingly the procedure of example 1. When the polyester stands at 150°C, 0.5 parts of di-t-butylhydroquinone along with 4.6 parts of ethyltriphenylphosphonium bromide are added along with a slow alimentation of 81.1 parts of glycidylmethacrylate. The mixture is stirred for 1 hour at 150°C under oxygen until following characteristics are obtained:
- AN=: 1 mg KOH/g
- OHN=: 35 mg KOH/g
- unsaturation=: 0.6 meq/g
- ICI200°C=: 4600 mPa.s
- Tgquenched (DSC, 20°/min)=: 46°C
- Mn (GPC)=: 4030

### Example 3

Synthesis of an ethylenically unsaturated polyester

A mixture of 591.8 parts of neopentyl glycol and 2.0 parts of n-dibutyltin trioctoate catalyst is placed in a conventional four-necked round bottom flask.

The flask contents are heated while stirring under nitrogen to a temperature of circa 140°C. Thereupon 386.4 parts of terephthalic acid and 257.6 parts of fumaric acid along with 0.2 parts of di-t-butylhydroquinone are added while stirring and the mixture is gradually heated to a temperature of 225°C. Distillation starts from about 190°C. After about 95% of the theoretical quantity of water is distilled, a transparent polymer is obtained and a vacuum of 50 mm Hg is gradually applied till following characteristics are measured:
- AN =: 3 mg KOH/g
- OHN =: 48 mg KOH/g
- unsaturation =: 2.2 meq/g
- ICI175°C =: 3500 mPa.s
- Tgquenched (DSC) =: 48°C
- Mn (GPC) =: 2240

### Example 4

A mixture of 170.0 parts of neopentyl glycol, 170.0 parts of ethylene glycol and 2.0 parts of n-butyltin trioctoate catalyst is placed in a conventional four-neck round bottom flask as in example 1.

The flask contents are heated while stirring, under nitrogen to a temperature of circa 140°C. Thereupon 395.0 parts of terephthalic acid is added while stirring and the mixture is gradually heated to a temperature of 230°C. Distillation starts from about 190°C. After about 95% of the theoretical quantity of water is distilled and a transparent prepolymer is obtained, following characteristics are obtained:
- AN=: 2 mg KOH/g
- OHN=: 345 mg KOH/g

Subsequently the hydroxyl functionalised prepolymer is cooled down to 180°C and 262.6 parts of fumaric acid is added while stirring. The mixture is gradually heated to 200°C. After 2 hours at 200°C, and when the mixture is transparent, 0.8 parts of tributylphosphite and 0.14 parts of di-t-butylhydroquinone are added and a vacuum of 50 mm HG is gradually applied. After 3 hours at 200°C and 50 mm Hg, following characteristics are obtained:
- AN=: 35 mg KOH/g
- OHN=: 6 mg KOH/g
- unsaturation=: 2.4 meq/g
- ICI200°C=: 4000 mPa.s
- Tgquenched (DSC, 20°/min)=: 48°C
- Mn (GPC)=: 2740

The carboxyl functionalised polyester is cooled down to 150°C and 0.5 parts of di-t-butylhydroquinone along with 4.6 parts of ethyltriphenylphosphonium bromide are added. Subsequently 70.3 parts of glycidylmethacrylate is slowly added while stirring under oxygen. An hour after the addition has ended, a polyester resin with following characteristics is obtained:
- AN=: 3 mg KOH/g
- OHN=: 34 mg KOH/g
- unsaturation=: 3.3 meq/g
- ICI200°C=: 1800 mPa.s
- Tgquenched (DSC, 20°/min)=: 42°C
- Mn (GPC)=: 3000

### Example 5

A mixture of 144.0 parts of neopentyl glycol, 344.0 parts of hydrogenated Bisphenol A. 24.0 parts of trimethylolpropane and 600.0 parts of 1,4-cyclohexanedicarboxylic acid along with 2.5 parts of n-butyltin trioctoate catalyst is placed in a conventional four-neck round bottom flask as in example 1.

The flask contents are heated while stirring under nitrogen to a temperature of circa 225°C. Distillation starts at a temperature of circa 140°C. When the distillation under atmospheric pressure has ceased, 1.0 parts of tributylphosphite is added and a vacuum of 50 mm Hg is gradually established. The reaction mixture is maintained for a further 2 hours at 225°C and under a pressure of 50 mm Hg till a resin with following characteristics is obtained:
- AN=: 53 mg KOH/g
- OHN=: 2 mg KOH/g

Subsequently the carboxyl functionalised prepolymer is cooled down and methacrylation is carried out accordingly the procedure of example 1.

When the polyester stands at 150°C, 1.0 parts of di-t-butylhydroquinone along with 7.5 parts of ethyltriphenylphosphonium bromide are added along with a slow alimentation of 126.0 parts of glycidylmethacrylate. The mixture is stirred for an hour at 150°C under oxygen until following characteristics are obtained:
- AN=: 3 mg KOH/g
- OHN=: 52 mg KOH/g
- unsaturation=: 1.3 meq/g
- ICI200°C=: 3400 mPa.s
- Tgquenched (DSC, 20°/mm)=: 51°C
- Mn (GPC)=: 3160

### Example 6

A mixture of 152.2 parts of ethylene glycol and 727.1 parts of dodecanoic acid along with 2.0 parts of n-butyltin trioctoate catalyst is put in reaction according to the procedure of example 1.

The flask contents are heated, while stirring, under nitrogen to a temperature of circa 140°C at which point water is distilled from the reactor. The heating is continued to a temperature of 220°C. When distillation under atmospheric pressure stops. 0.8 parts of tributylphosphite is added and a vacuum of 50 mm Hg is gradually applied.

After 3 hours at 220°C and 50 mm Hg, following characteristics are obtained:
- AN=: 52 mg KOH/g
- OHN=: 2 mg KOH/g

Subsequently the carboxyl functionalised polyester is cooled down and the methacrylation is carried out accordingly the procedure of Example 1. When the polyester stands at 140°C. 1.2 parts of di-t-butylhydroquinone and 3.9 parts of benzyltriphenylphosphoniumchloride is added along with a slow alimentation of 201.1 parts of glycidylinethacrylate. The mixture is stirred for 1 hour at 140°C under oxygen until following characteristics are obtained:
- AN=: 2 mg KOH/g
- OHN=: 48 mg KOH/g
- unsaturation=: 0.8 meq/g
- ICI200°C=: 150 mPa.s
- Tmquenched (DSC, 20°/min)=: 65°C
- Mn (GPC)=: 2530

### Example 7

358.7 parts of n-butylacetate are brought in a double walled flask of 51 equipped with a stirrer, a water cooled condenser an inlet for nitrogen and a thermoprobe is attached to a thermoregulator.

The flask content is heated and stirred continuously while nitrogen is purged through the solvent. At a temperature of 92°C a mixture of 89.6 parts of n-butylacetate with 5.67 parts of 2,2'-azobis(2-methylbutanenitrile) is fed in the flask during 215 minutes with a peristaltic pump. Five minutes after the start of this feed, a second feed is started with another pump and is a mixture of:
- 127.5 parts of glycidylmethacrylate
- 170.8 parts of isobornylacrylate
- 3.78 parts of butylmethacrylate
- 146.3 parts of styrene
- 17.93 parts of n-dodecylmercaptan
- 2.24 parts of ditridecylthiodipropionate ,

This feed takes 180 minutes.

After 315 minutes of total synthesis time, the flask content is emptied and dried in a rotary evaporator at 150°C during 45 minutes.

The dry polymer is characterised by:
- E.E.W.=: 1.89 meq/g
- ICI125°C=: 50 000 mPa.s

The dry resin of step 1 is transversed in a round bottom single walled flask of 51 equipped with an air inlet , a thermoprobe, and an inlet for the methacrylic acid to be fed. The resin is heated to 100°C and air is continuously purged through. After 30 minutes 0.08 parts of di-t-butylhydroquinone is added to the polymer. After 60 minutes 77.21 parts of methacrylic acid are fed with a peristaltic pump in the mixture during 30 minutes. The temperature is kept constant during the synthesis. The acid number is checked regularly through titration. At an acid number of 6.2 mg KOH/g the polymer is cooled down.

The resin is characterised by:
- unsaturation=: 1.63 meq/g
- ICI125°C=: 65 000 mPa.s
- Tgquenched (DSC, 20°/min)=: 58°C
- Mn (GPC)=: 5642

### Example 8

221.3 parts of n-butylacetate are brought in a double walled flask of 51 equipped with a stirrer, a water cooled condenser an inlet for nitrogen and a thermoprobe is attached to a thermoregulator.

The flask content is heated and stirred continuously while nitrogen is purged through the solvent. At a temperature of 110°C a mixture of 234.7 parts of n-butylacetate with 13.4 parts of 2,2'-azobis(2-methylbutanenitrile) is fed in the flask during 215 minutes with a peristaltic pump. Five minutes after the start of this feed, a second feed is started with another pump and is a mixture of
- 102.7 parts of hydroxyethylmethacrylate
- 88.5 parts of isobornylacrylate
- 162.9 parts of methylmethacrylate
- 88.5 parts of n-butylmethacrylate

This feed takes 180 minutes.

The acrylic copolymer having functional groups and characterised by:
- OHN=: 96 mg KOH/g
- ICI125°C=: 22 500 mPa.s
- Tgquenched (DSC, 20°/min)=: 53°C

then is transversed as a solution in a round bottom single walled flask as in example 7. The solution is heated to 40°C and air is continuously purged through. After 30 minutes 0.09 parts of Norsocryl 200 (inhibitor commercialised by Elf Atochem) and 87.6 parts of 2-isocyanotoethylmethacrylate are added in 180 minutes. The isocyanate number is checked regularly through back-titration of dibutylamine with hydrochloric acid. When the isocyanate content is less than 0.3% of the initial value the flask content is cooled down and dried in a rotary evaporator at 30°C.

The ethylenically unsaturated acrylic copolymer thus prepared is characterised by following characteristics:
- unsaturation=: 1.45 meq/g
- ICI100°C=: 50 000 mPa.s
- Tgquenched (DSC, 20°/min)=: 51°C
- Mn (GPC)=: 3125

### Example 9

In a conventional four-neck round bottom flask equipped with a stirrer, an inlet for oxygen, an inlet for (meth)acrylic acid and a thermocouple attached to a thermoregulator, 910 parts of Araldite GT7004, a Bisphenol A-type epoxy resin, are heated under oxygen to a temperature of 140°C. Subsequently 0.8 parts of ethyltriphenylphosphonium bromide are added and the addition of 90 parts of acrylic acid containing 0.2 parts of di-t-butylhydroquinone, is started. The acrylic acid addition is completed in a 3 hour period. One and an half hour after the completion of the acrylic acid addition, a resin with the following characteristics is obtained:
- AN=: 7 mg KOH/g
- unsaturation=: 1.24 meq/g
- ICI200°C=: 700 mPa.s
- Tgquenched (DSC, 20°/min)=: 49°C
- Mn (GPC)=: 1650

### Example 10

In a similar way as in example 9, 934 parts of ST4100 D, an hydrogenated Bisphenol A type epoxy resin (KUKDO Chem. Ind. Co.,Ltd), are reacted with 66 parts of acrylic acid containing 0.2 parts of di-t-butylhydroquinone. The reaction is catalysed through the addition of 0.8 parts of ethyltriphenylphosphonium bromide. A resin with the following characteristics is obtained:
- AN=: 5 mg KOH/g
- unsaturation=: 0.92 meq/g
- ICI200°C=: 2700 mPa.s
- Tgquenched (DSC, 20°/min)=: 55°C
- Mn (GPC)=: 3320

### Example 11

In a conventional four neck round bottom flask, equipped with a stirrer, an inlet for oxygen, an inlet for hydroxyethylmethacrylate and a thermocouple attached to a thermoregulator, 391 parts of hexamethylenediisocyanate and 0.15 parts of dibutyltindilaurate are heated under oxygen to 70°C. Subsequently 606 parts of hydroxyethylmethacrylate containing 0.2 parts of di-t-butylhydroquinone, are slowly added in about 4 hours. When the addition is completed, the temperature is increased to 90°C and another 0.2 parts of di-t-butylhydroquinone are added. After an additional one hour stirring a white crystalline oligomer with following characteristics is obtained:
- OHN=: 6 mg KOH/g
- unsaturation=: 4.7 meq/g
- ICI200°C=: 130 mPa.s
- Tgquenched (DSC, 20°/min)=: 66°C
- Mn (GPC)=: 428

### Example 12

In a conventional double walled flask, equipped with a stirrer, an inlet for oxygen, an inlet for hydroxyethylacrylate and a thermocouple attached to a thermoregulator, 450 parts of toluene and 0.6 parts of hydroquinone are loaded. Thereupon 162.3 parts of phosphorpentoxide are added in 5 minutes while stirring. Thereupon 397.7 parts of hydroxyethylacrylate together with 0.6 parts of hydroquinone are slowly added over a period of 30 minutes: meanwhile the mixture is refrigerated in order to keep the temperature below 70°C. One hour after the completion of the hydroxyethylacrylate addition the flask content is cooled down and the ethylenically unsaturated phosphorous containing compound is isolated using a rotary evaporator.

### Example 13

### Preparation of radiation curable powder coating compositions

A series of white powders, which can be used for the manufacturing of coatings by spraying with the aid of an electrostatic spray gun, is prepared from blends of the ethylenically unsaturated amorphous and/or semicrystalline polyester, the ethylenically unsaturated acrylic copolymer, the ethylenically unsaturated polyphenoxy resin, the ethylenically unsaturated non-aromatic epoxy resin, optionally the ethylenically unsaturated monomer or oligomer, and the phosphorous containing compound, in accordance with the present invention and, by way of comparison, from the same blends but without the phosphorous compound, the formulation of these powders being as follows:

| | |
|---|---|
| binder | 750.0 parts |
| titanium dioxide (Kronos 2310 (Kronos)) | 250.0 parts |
| α-hydroxyketone (Irgacure 2959 (Ciba)) | 12.5 parts |
| bisacylphosphineoxide (Irgacure 819 (Ciba)) | 12.5 parts |
| fluidity regulating agent (Resiflow PV5 (Worlee Chemie)) | 10.0 parts |

These powder compositions are prepared by dry mixing the ethylenically unsaturated resins the phosphorous containing compound (b) and the ethylenically unsaturated monomer or oligomer (c), if present, the photo-initiator and the various additional substances conventionally used for the manufacture of powder paints and varnishes. The mixture obtained is homogenised at a temperature of approximately 70 to 140°C in a Prism 16 mm (L/D = 15/ 1) twin screw extruder (from the company Prism), and the extrudate is ground in a grinder of Alpine 100UPZ (from the company Alpine). To complete, the powder is sieved in order to obtain a size of the particles between 10 and 110 µm.

### Example 14

### Characteristics of the coating

The powders formulated as described in example 13 with the binder composition in accordance with the present invention and with the binder systems given by way of comparison, are applied with an electrostatic spray gun at a voltage of 60 kV on untreated cold rolled steel as well as on yellow chromated aluminium (Cr6+) with a film thickness of 40 to 100 µm.,

The coatings deposited are then subjected to melting in a medium infrared/convection oven (Triab) at a temperature of 140°C during a time of approximately 3 minutes, and are then subjected to irradiation with ultraviolet light emitted by a 160 W/cm Gallium-doped followed by a 160 W/cm medium pressure mercury vapour UV-bulb (Fusion UV Systems Ltd.) with a total UV dose of 4000 mJ/cm².

The cured coatings thus obtained are subjected to conventional tests. The results obtained are reported in table 1 which shows in:
- column 1:: the number of the example of the formulation;
- column 2:: the number of the preparation example of the ethylenically unsaturated resin and of the optional ethylenically unsaturated oligomer, in weight percentage in confront of the weight of the complete binder;
- column 3:: weight percentage of the phosphorous containing compound of Example 12, in confront of the weight of the complete binder;
- column 4:: the value of resistance to direct impact (DI) in kg.cm, according to ASTM D2795 on cold rolled steel/yellow chromated aluminium;
- column 5:: the value of resistance to reverse impact (RI) in kg.cm, according to ASTM D2795 on cold rolled steel/yellow chromated aluminium;
- column 6:: the visual assessment of the coating, according to which "good" or "g" means that the cured coating possesses a smooth and glossy appearance without apparent defects such as craters, pinholes and the like; "medium" ; or "m" means that the cured coating exhibits a slight orange peel with a gloss, measured at an angle of 60°, which is less than 90% and "poor" or "p" means that the cured, coating exhibits an orange peel with a gloss, measured at an angle of 60°, which is less than 80% and, in addition, apparent defects;
- column 7:: classification value for the cross-cut adhesion by tape test according to ASTM D3359 according to which:
5B: the edges of the cuts are completely smooth; none of the squares of the lattice is detached;
4B: small flakes of the coating are detached at intersections; less than 5% of the area is affected;
3B: small flakes of the coating are detached along edges and at intersections of cuts; the area affected is 5 to 15% of the lattice;
2B: the coating has flaked along the edges and on parts of the squares; the area affected is 15 to 35% of the lattice;
1B: the coating has flaked along the edges of cuts in large ribbons and whole squares have detached; the area affected is 35 to 65% of the lattice;
0B: flaking and detachment worse than grade 1.

The evaluation of the cross-cut adhesion test is performed both on untreated cold rolled steel and yellow chromated aluminium.

As clearly appears from table 1, the introduction of the phosphorous containing compound of example 12 to the binder composition tremendously improves the metal adhesion of the radiation curable powder coatings derived, without deteriorating neither film flexibility nor visual assessment.

The quantity of phosphorous containing compound (example 12) to be added to the binder composition is different from formulation to formulation, but is easily fine-tuned by a limited number of experiments (ex. 23, ex. 32, ex. 33).

Comparing examples 15 to 23 with examples 24 to 33 (= comparative examples) respectively, proves values for direct and reverse impact on untreated cold rolled steel and yellow chromated aluminium which indeed are comparable or even slightly better when the phosphorous containing compound is added to the formulation. Besides no effect is observed on the visual assessment of the paint films obtained.

Examples 15 to 23 clearly show the improved adhesion properties to metal substrates of a paint film obtained from the radiation curable powder compositions of the present invention.

**Table 1**

| Formulation | % weight ethylenically unsaturated resin in binder | % weight P. compound in binder | RI Steel/Alu | DI Steel/Alu | visual assessment | cross-cut Steel/Alu |
|---|---|---|---|---|---|---|
| 15 | Ex.1 - 98 | 2 | 140/140 | 140/140 | g | 5B/5B |
| 16 | Ex.1 - 77 /Ex.7 - 20 | 3 | 120/120 | 140/120 | g | 5B/5B |
| 17 | Ex.2 - 67 / Ex.6 - 30 | 3 | 120/120 | 140/120 | g | 5B/5B |
| 18 | Ex.4 - 46 / Ex.9 - 40/ Ex. 11-10 | 4 | 80/80 | 100/80 | g | 5B/4B |
| 19 | Ex.5 - 73 /Ex.10-25 | 2 | 140/120 | 140/120 | g - m | 5B/5B |
| 20 | Ex.8 - 80 /Ex.6 - 15 | 5 | 60/40 | 60/40 | g - m | 4B/5B |
| 21 | Ex.7 - 50 / Ex.3 - 20 / Ex.10 - 25 | 5 | 60/60 | 60/40 | g - m | 4B/4B |
| 22 | Ex.8 - 48 / Ex.9 - 49 | 3 | 60/60 | 80/60 | g | 5B/5B |
| 23 | Ex.2 - 63/ Ex.9 - 23 / Ex.6-10 | 4 | 100/100 | 120/120 | g | 5B/5B |
| 24 | Ex.1-100 | 0 | 140/ 120 | 140/140 | g | 2B/2B |
| 25 | Ex.1-80/Ex.7-20 | 0 | 120/100 | 120/120 | g | 2B/1B |
| 26 | Ex.2 - 70 / Ex.6-30 | 0 | 120/120 | 140/120 | g | 3B/2B |
| 27 | Ex.4 - 50 / Ex.9 - 40 / Ex.11 - 10 | 0 | 80/80 | 80/80 | g | 2B/2B |
| 28 | Ex.5-75/Ex.10-25 | 0 | 120/100 | 120/120 | g-m | 3B/2B |
| 29 | Ex.8-80/Ex.6-20 | 0 | 40/40 | 40/40 | g-m | 2B/1B |
| 30 | Ex.7 - 50 / Ex.3 - 20 / Ex. 10 - 30 | 0 | 40/20 | 40/40 | g-m | 1B/0B |
| 31 | Ex.8 - 50 / Ex.9-50 | 0 | 40/40 | 60/60 | g | 3B/3B |
| 32 | Ex.2 - 64 / Ex.9 - 24 / Ex.6-10 | 2 | 100/100 | 120/100 | g | 4B/3B |
| 33 | Ex.2-65/Ex.9-25/Ex.6-10 | 0 | 100/ 100 | 120/ 120 | g | 2B/2B |

## Claims

1. Radiation curable powder coating composition which comprises:
(a) 80.0 to 99.5 weight percentage of at least one ethylenically unsaturated resin;
(b) 0.5 to 20.0 weight percentage of at least one phosphorous containing compound selected from the group consisting of phosphoric acid and organic derivates of phosphinic, phosphonic or phosphoric acid, said organic derivate having at least one organic moiety **characterised by** the presence of at least one unit of ethylenically unsaturation, preferably terminally located; and
(c) 0 to 20.0 weight percentage of at least one ethylenically unsaturated monomer or oligomer,
calculated on the whole composition of (a), (b) and (c).

2. Radiation curable powder according to claim 1, which comprises:
(a) 80 to 99.5 weight percentage and preferably 90 to 99 weight percentage of an ethylenically unsaturated resin selected from:
(a.1) ethylenically unsaturated group containing amorphous and/or semi-crystalline polyester;
(a.2) ethylenically unsaturated group containing acrylic copolymer:
(a.3) ethylenically unsaturated group containing polyphenoxy resin;
(a.4) ethylenically unsaturated group containing non-aromatic epoxy resin:
(a.5) ethylenically unsaturated group containing polyurethanes;
(a.6) ethylenically unsaturated group containing polyesteramide
used alone or as a mixture;
(b) 0.5 to 20 weight percentage and preferably 1 to 10.0 weight percentage of a phosphorous containing compound (b) having the formula: 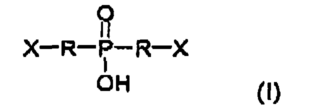 wherein each R is the same or different, and each R is independently a divalent organic radical directly bonded to the phosphorus atom through a carbon-phosphorus bond, said divalent radical being selected from the group consisting of divalent unsubstituted organic radical and divalent organic radical having at least one substituent group selected from the class consisting of halogen, hydroxyl, amino, alkyl radical containing from 1 to 8 carbon atoms and aryl radical having at least one moiety containing at least one aromatic nucleus; and wherein each X is the same or different, and each X Is independently a functional group selected from the class consisting of hydrogen, hydroxyl, amino, mercapto, halogen and CH₂=C<; 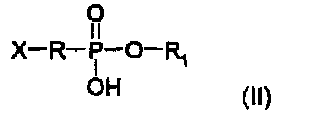 wherein R and X are as previously defined; and R₁ is hydrogen or -R₂-X, wherein R₂ is a divalent organic radical directly bonded to the oxygen radical through a carbon-oxygen bond, said divalent radical R₂ being selected from the group consisting of divalent, unsubstituted organic radical and divalent organic radical having at least one substituent group selected from the class consisting of halogen, hydroxyl, amino, alkyl radical containing from 1 to 8 carbon atoms and aryl radical having at least one moiety containing at least one aromatic nucleus and X is as previously defined; and 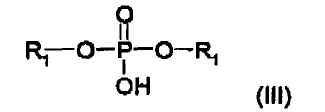 wherein R₁ is as previously described
(c) 0 to 20.0 weight percentage of an ethylenically unsaturated monomer or oligomer (c) optionally selected from the group consisting of compounds having a (meth)acrylate group, an allyl group or a vinyl group, optionally the oligomer being derived from polyester, polyether, polycarbonate, polyurethane or acrylic copolymers,
calculated on the whole composition of (a), (b) and (c),

3. Radiation curable powder composition according to any of the preceding claims 1 or 2, wherein the ethylenically unsaturated group containing polyester (a.1) is obtainable from the reaction of a diisocyanate with an hydroxyalkyl(meth)acrylate and a hydroxyl group containing polyester or from the reaction of glycidyl(meth)acrylate with a polyester containing carboxyl groups, for giving a (meth)acryloyl group containing polyester.

4. Radiation curable powder composition according to any of the preceding claims 1 to 3, wherein the ethylenically unsaturated group containing polyester (a.1) is **characterised by**;
- a number averaged molecular weight ranging from 1100 - 16000, preferably 1300 to 8500;
- a melt viscosity (cone/plate at 200°C) of less than 50 000 mPa.s;
- degree of unsaturation from 0.17 to 4.00, and preferably 0.35 to 2.50 milliequivalents of double bonds per gram of polyester,
- a glass transition temperature ranging from 35 to 85°0; and
- a melting point ranging from 60 to 150°C and a glass transition temperature of less than 50°C for semi-crystalline.

5. Radiation curable powder composition according to any of the preceding claims 1 to 4 wherein the ethylenically unsaturated group containing acrylic copolymer (a.2) is obtained from the reaction of:
- an acrylic copolymer having functional groups obtained from 40 to 95 mole percentage of at least one monomer having acrylic or methacrylic groups, 0 to 60 mole percentage of another ethylenically unsaturated monomer and 5 to 60 mole percentage of an ethylenically unsaturated monomer having functional groups capable of reacting with an epoxy, carboxylic acid, hydroxyl or isocyanate group
- a monomer having an ethylenically unsaturated group and a functional group capable of reacting with a carboxylic acid, epoxy, isocyanate or hydroxyl group.

6. Radiation curable powder composition according to any of the preceding claims 1 to 5 wherein the ethylenically unsaturated group containing acrylic copolymer (a.2) is **characterised by**
- a number averaged molecular weight ranging from 1000 to 8000, preferably from 2000 to 6000;
- a glass transition temperature ranging from 45 to 100°C;
- a degree of unsaturation ranging from 0.35 to 3.50 and preferably from 0.5 to 2.5 milliequivalents of double bonds per gram of acrylic copolymer; and
- a melt viscosity (cone / plate at 200°C) of less than 50000 mPa.s.

7. Radiation curable powder composition according to any of the preceding claims 1 to 6 wherein the ethylenically unsaturated group containing polyphenoxy resin (a.3) is the reaction product of (meth)acrylic acid with a glycidyl group containing polyphenoxy resin.

8. Radiation curable powder composition according to any of the preceding claims 1 to 7 wherein the ethylenically unsaturated group containing polyphenoxy resin (a.3) is **characterised by**:
- a number averaged molecular weight ranging from 500 to 5000, preferably from 650 to 3500
- a glass transition temperature ranging from 30 to 80°C
- a degree of unsaturation ranging from 0.2 to 6.0 and preferably from 0.5 to 4.5 milliequivalents of double bonds per gram of polyphenoxy resin; and
- a melt viscosity (cone/plate at 200°C) of less than 25000 mPa.s.

9. Radiation curable powder composition according to any of the preceding claims 1 to 8 wherein the ethylenically unsaturated group containing non-aromatic epoxy resin resin (a.4) is the reaction product of (meth)acrylic acid with a glycidyl group containing aliphatic resin.

10. Radiation curable powder composition according to any of the preceding claims 1 to 9 wherein the ethylenically unsaturated non-aromatic epoxy resin is **characterised by**:
- a number averaged molecular weight ranging from 450 to 5000, preferably from 1000 to 3500:
- a glass transition temperature ranging from 30 to 80°C;
- a degree of unsaturation ranging from 0.4 to 4.5 and preferably from 0.5 to 2.5 milliequivalents of double bonds per gram of resin; and
- a melt viscosity (cone/plate at 200°C) of less than 20000 mPa.s.

11. Radiation curable powder composition according to any of the preceding claims 1 to 10 wherein the unsaturated group containing polyurethane (a.5) is obtained from the reaction of an hydroxyalky(meth)acrylats and a polyol with a polyisocyanate giving a (meth)acryloyl group containing polyurethane.

12. Radiation curable powder composition according to any of the preceding claims 1 to 11 herein the polyol used for the preparation of the (meth)acryloyl group containing polyurethane is a C₂-C₁₅ aliphatic or cycloaliphatic diol, a polyesterpolyol or a polyetherpolyol

13. Radiation curable powder composition according to any of the preceding claims 1 to 12 wherein the (meth)acryloyl group containing polyurethane is **characterised by** :
- a number averaged molecular weight ranging from 800 - 15000, preferably 1300 to 8500;
- degree of terminal unsaturation 0.15 to 2.00, and preferably 0,35 to 1.50 milliequivalents of double bonds per gram of polyester,
- a glass transition temperature ranging from 40 to 100°C; and
- a melt viscosity (cone/plate at 200°C) of less than 100000 mPas

14. Radiation curable powder composition according to any of the preceding claims 1 to 13 wherein the unsaturated group containing polyesteramide (a.6) is obtained from the reaction of glycidyl(meth)acrylate with a carboxylic acid group terminated polyesteramide, giving a (meth)acryloyl group containing polyesteramide,

15. Radiation curable powder composition according to any of the preceding claims 1 to 14 wherein the carboxylic acid group terminated polyesteramide used for the preparation of the (meth)acryloyl group terminated plyesteramide is otained fro the reaction of diamine with a carboxylic acid grup containing polyester, the polyester being prepared from the reaction of one or more aliphatic, cycloaliphatic or aromatic polyacids with one or more aliphatic or cycloaliphatic polyols.

16. Radiation curable powder compostion according to any of the preceding claims 1 to 15 wherein the (meth)acryloyl group containing polyesteramide is **characterised by**:
- a number averaged molecular weight ranging from 800 - 16000, preferably 1 300 to 8500;
- degree of terminal unsaturation 0.15 to 2.00, and preferably 0.35 to 1.60 milliequivalents of double bonds per gram of polyester,
- a glass transition temperature ranging from 40 to 70°C; and
- a melt viscosity (cone/plate at 200°C) of less than 50000 mPas.

17. Radiation curable powder composition according to any of the preceding claims 1 to 16 which comprises from 0 to 20.0 and preferably from 0 to 10.0 weight percentage of an ethylenically unsaturated monomer or oligomer (c).

18. Radiation curable powder composition according to any of the preceding claims 1 to 17 wherein the phosphorous containing compound (b) has the formula: 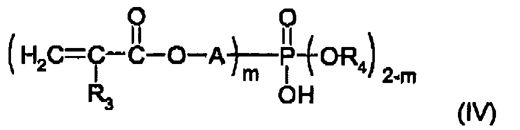 wherein R₃ is selected from the group consisting of hydrogen, halogen, an alkyl group having from 1 to 8 carbon atoms, and CH₂=CH-; and R₄ is selected from the group consisting of hydrogen, an alkyl group having from 1 to 8 carbon atoms, and a haloalkyl group having from 1 to 8 carbon atoms; A is selected from the group consisting of -R₅O- and -(R₆O)ₙ-, wherein R₅ is an aliphatic or cycloaliphatic alkylene group containing from 1 to 9 carbon atoms; R₆ is an alkylene group containing from 1 to 7 carbon atoms; n Is an integer from 2 to 10, and m is 1 or 2.

19. Radiation curable powder composition according to any of the preceding claims 1 to 18 wherein said phosphorous containing compound comprises 2-mathacryloyloxyethyl phosphate.

20. Radiation curable powder composition according to any of the preceding claims 1 to 19, which additionally comprises up to 15, preferably 0.5 to 8.0 parts by weight of a photo-initiator for 100 parts by weight of the total of the ethylenically unsaturated group containing polymer (a), the ethylenically unsaturated monomer or oligomer (c), if present, and the phosphorous containing compound (b) and optionally a photo-activator.

21. Radiation curable powder composition according to any of the preceding claims 1 to 20, which additionally comprises from 0 to 10 parts by weight of at least one coating properties modifying substance for 100 parts by weight of the total of the ethylenically unsaturated group containing polymer (a), the ethylenically unsaturated monomer or oligomer (c), if present, and the phosphorous containing compound (b).

22. Powder varnish or powder paint comprising a radiation curable powder composition according to claims 1 to 21.

23. Process for coating an article wherein a radiation curable powder composition according to any claims 1 to 21 or a powder varnish or a powder paint according to claim 22 is deposited on the article, followed by melting the coating thus obtained and by radiation curing the coating in the molten state.

24. Process according to claim 23 wherein the melting of the coating is achieved by heating the coating at a temperature of 80 to 150°C preferably for a time of 0.5 to 10.0 minutes and/or the curing of the coating in the molten state is achieved by exposing the said coating to UV radiation or to accelerated electron beams for a time which is sufficient to form a cured coating.

25. Article partially or entirely coated by the process of any of claims 23 or 24.

## Patentansprüche

1. Strahlungshärtbare Pulverbeschichtungszusammensetzung, die umfasst:
(a) 80,0 bis 99,5 Gewichtsprozent von mindestens einem ethylenisch ungesättigten Harz;
(b) 0,5 bis 20,0 Gewichtsprozent von mindestens einer Phosphor enthaltenden Verbindung, ausgewählt aus der Gruppe, bestehend aus Phosphorsäure und organischen Derivaten von Phosphin-, Phosphon- oder phosphoriger Säure, wobei das organische Derivat mindestens eine organische Einheit aufweist, **gekennzeichnet durch** das Vorliegen von mindestens einer Einheit von ethylenischer Ungesättigtheit, vorzugsweise endständig angeordnet, und
(c) 0 bis 20,0 Gewichtsprozent von mindestens einem ethylenisch ungesättigten Monomer oder Oligomer,
berechnet auf die gesamte Zusammensetzung von (a), (b) - und (c).

2. Strahlungshärtbares Pulver nach Anspruch 1, das umfasst:
(a) 80 bis 99,5 Gewichtsprozent und vorzugsweise 90 bis 99 Gewichtsprozent von einem ethylenisch ungesättigten Harz, ausgewählt aus:
(a.1) ethylenisch ungesättigte Gruppe enthaltendem amorphem und/oder semikristallinem Polyester;
(a.2) ethylenisch ungesättigte Gruppe enthaltendem Acryl-Copolymer;
(a.3) ethylenisch ungesättigte Gruppe enthaltendem Polyphenoxy-Harz;
(a.4) ethylenisch ungesättigte Gruppe enthaltendem nicht aromatischem Epoxid-Harz;
(a.5) ethylenisch ungesättigte Gruppe enthaltenden Polyurethanen;
(a.6) ethylenisch ungesättigte Gruppe enthaltenden Polyesteramiden;
die einzeln oder als ein Gemisch verwendet werden;
(b) 0,5 bis 20 Gewichtsprozent und vorzugsweise 1 bis 10,0 Gewichtsprozent von einer Phosphor enthaltenden Verbindung (b) mit der Formel: 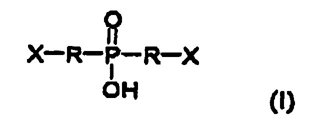 worin jedes R gleich oder verschieden ist und jedes R unabhängig einen zweiwertigen organischen Rest, direkt gebunden an das Phosphoratom über eine Kohlenstoff-Phosphor-Bindung, darstellt, wobei der zweiwertige Rest ausgewählt ist aus der Gruppe, bestehend aus zweiwertigem unsubstituiertem organischem Rest und zweiwertigem organischem Rest mit mindestens einer Substituentengruppe, ausgewählt aus der Klasse, bestehend aus Halogen, Hydroxyl, Amino, Alkylrest, enthaltend 1 bis 8 Kohlenstoffatome, und Arylrest mit mindestens einer Einheit, enthaltend mindestens einen aromatischen Kern, und worin jedes X gleich oder verschieden ist und jedes X unabhängig eine funktionelle Gruppe darstellt, ausgewählt aus der Klasse, bestehend aus Wasserstoff, Hydroxyl, Amino, Mercapto, Halogen und CH₂=C<; 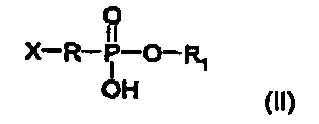 worin R und X wie vorstehend definiert sind; und R₁ Wasserstoff oder -R₂-X darstellt, worin R₂ einen zweiwertigen organischen Rest, direkt gebunden an den Sauerstoffrest über eine Kohlenstoff-Sauerstoff-Bindung, darstellt, wobei der zweiwertige Rest R₂ ausgewählt ist aus der Gruppe, bestehend aus zweiwertigem unsubstituiertem organischem Rest und zweiwertigem organischem Rest mit mindestens einer Substituentengruppe, ausgewählt aus der Klasse, bestehend aus Halogen-, Hydroxyl-, Amino-, Alkylrest, enthaltend 1 bis 8 Kohlenstoffatome, und Arylrest mit mindestens einer Einheit, enthaltend mindestens einen aromatischen Kern, und X wie vorstehend definiert ist, und 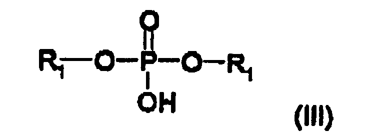 worin R₁ wie vorstehend beschrieben ist;
(c) 0 bis 20,0 Gewichtsprozent von einem ethylenisch ungesättigten Monomer oder Oligomer (c), gegebenenfalls ausgewählt aus der Gruppe, bestehend aus Verbindungen mit einer (Meth)acrylatgruppe, einer Allylgruppe oder einer Vinylgruppe, wobei das Oligomer gegebenenfalls von Polyester-, Polyether-, Polycarbonat-, Polyurethan- und Acryl-Copolymeren abgeleitet ist;
berechnet auf die Gesamtzusammensetzung von (a), (b) und (c).

3. Strahlungshärtbare Pulverzusammensetzung nach einem der vorangehenden Ansprüche 1 oder 2, worin der die ethylenisch ungesättigte Gruppe enthaltende Polyester (a.1) aus der Reaktion von einem Diisocyanat mit einem Hydroxyalkyl(meth)acrylat und einem Hydroxylgruppe enthaltenden Polyester oder aus der Reaktion von Glycidyl(meth)-acrylat mit einem Carboxylgruppen enthaltenden Polyester erhältlich ist, zum Gewinnen eines (Meth)acryloylgruppen enthaltenden Polyesters.

4. Strahlungshärtbare Pulverzusammensetzung nach einem der vorangehenden Ansprüche 1 bis 3, worin der die ethylenisch ungesättigte Gruppe enthaltender Polyester (a.1) **gekennzeichnet ist durch**:
- ein zahlenmittleres Molekulargewicht im Bereich von 1100 bis 16000, vorzugsweise 1300 bis 8500;
- eine Schmelzviskosität (Kegel / Platte bei 200°C) von weniger als 50000 mPa.s;
- Grad von Ungesättigtheit von 0,17 bis 4,00 und vorzugsweise 0,35 bis 2,50 Milliäquivalente der Doppelbindungen pro Gramm Polyester;
- eine Glasübergangstemperatur im Bereich von 35 bis 85°C und
- einen Schmelzpunkt im Bereich von 60 bis 150°C und eine Glasübergangstemperatur von weniger als 50°C für semikristallin.

5. Strahlungshärtbare Pulverzusammensetzung nach einem der vorangehenden Ansprüche 1 bis 4, worin das die ethylenisch ungesättigte Gruppe enthaltende Acryl-Copolymer (a.2) erhalten wird aus der Reaktion von:
- einem Acryl-Copolymer mit funktionellen Gruppen, erhalten aus 40 bis 95 Molprozent von mindestens einem Monomer mit Acryl- oder Methacrylgruppen, 0 bis 60 Molprozent von einem weiteren ethylenisch ungesättigten Monomer und 5 bis 60 Molprozent von einem ethylenisch ungesättigten Monomer mit funktionellen Gruppen, die mit einer Epoxy-, Carbonsäure-, Hydroxyl- oder Isocyanatgruppe reagieren können;
- einem Monomer mit einer ethylenisch ungesättigten Gruppe und einer funktionellen Gruppe, die mit einer Carbonsäure-, Epoxy-, Isocyanat- oder Hydroxylgruppe reagieren kann.

6. Strahlungshärtbare Pulverzusammensetzung nach einem der vorangehenden Ansprüche 1 bis 5, worin das die ethylenisch ungesättigte Gruppe enthaltende Acryl-Copolymer (a.2) **gekennzeichnet ist durch**:
- ein zahlenmittleres Molekulargewicht im Bereich von 1000 bis 8000, vorzugsweise 2000 bis 6000;
- eine Glasübergangstemperatur im Bereich von 45 bis 100°C;
- einen Grad an Ungesättigtheit im Bereich von 0,35 bis 3,50 und vorzugsweise 0,5 bis 2,5 Milliäquivalenten von Doppelbindungen pro Gramm Acryl-Copolymer und
- eine Schmelzviskosität (Kegel / Platte bei 200°C) von weniger als 50000 mPa.s.

7. Strahlungshärtbare Pulverzusammensetzung nach einem der vorangehenden Ansprüche 1 bis 6, worin das die ethylenisch ungesättigte Gruppe enthaltende Polyphenoxy-Harz (a.3) das Reaktionsprodukt von (Meth)acrylsäure mit einem Glycidylgruppe enthaltenden Polyphenoxy-Harz darstellt.

8. Strahlungshärtbare Pulverzusammensetzung nach einem der vorangehenden Ansprüche 1 bis 7, worin das die ethylenisch ungesättigte Gruppe enthaltende Polyphenoxy-Harz (a.3) **gekennzeichnet ist durch**:
- ein zahlenmittleres Molekulargewicht im Bereich von 500 bis 5000, vorzugsweise von 650 bis 3500;
- eine Glasübergangstemperatur im Bereich von 30 bis 80°C;
- einen Grad an Ungesättigtheit im Bereich von 0,2 bis 6,0 und vorzugsweise 0,5 bis 4,5 Milliäquivalenten von Doppelbindungen pro Gramm Polyphenoxy-Harz und
- eine Schmelzviskosität (Kegel / Platte bei 200°C) von weniger als 25 000 mPa.s.

9. Strahlungshärtbare Pulverzusammensetzung nach einem der vorangehenden Ansprüche 1 bis 8, worin das die ethylenisch ungesättigte Gruppe enthaltende nicht aromatische Epoxidharz-Harz (a.4) das Reaktionsprodukt von (Meth)acrylsäure mit einem Glycidylgruppe enthaltenden aliphatischen Harz darstellt.

10. Strahlungshärtbare Pulverzusammensetzung nach einem der vorangehenden Ansprüche 1 bis 9, worin das ethylenisch ungesättigte nicht aromatische Epoxid-Harz **gekennzeichnet ist durch**:
- ein zahlenmittleres Molekulargewicht im Bereich von 450 bis 5000, vorzugsweise 1000 bis 3500;
- eine Glasübergangstemperatur im Bereich von 30 bis 80°C;
- einen Grad an Ungesättigtheit im Bereich von 0,4 bis 4,5 und vorzugsweise von 0,5 bis 2,5 Milliäquivalenten von Doppelbindungen pro Gramm Harz und
- eine Schmelzviskosität (Kegel / Platte bei 200°C) von weniger als 20 000 mPa.s.

11. Strahlungshärtbare Pulverzusammensetzung nach einem der vorangehenden Ansprüche 1 bis 10, worin das ungesättigte Gruppe enthaltende Polyurethan (a.5) aus der Reaktion von einem Hydroxyalkyl(meth)acrylat und einem Polyol mit einem Polyisocyanat erhalten wird, unter Gewinnung von einem (Meth)acryloylgruppe enthaltenden Polyurethan.

12. Strahlungshärtbare Pulverzusammensetzung nach einem der vorangehenden Ansprüche 1 bis 11, worin das für die Herstellung von dem (Meth)acrylolylgruppen enthaltenden Polyurethan verwendete Polyol ein C₂-C₁₅-aliphatisches oder cycloaliphatisches Diol, ein Polyesterpolyol oder ein Polyetherpolyol darstellt.

13. Strahlungshärtbare Pulverzusammensetzung nach einem der vorangehenden Ansprüche 1 bis 12, worin das (Meth)acrylolylgruppe enthaltende Polyurethan **gekennzeichnet ist durch**:
- ein zahlenmittleres Molekulargewicht im Bereich von 800 bis 15 000, vorzugsweise 1300 bis 8500;
- einen Grad an endständiger Ungesättigtheit von 0,15 bis 2,00 und vorzugsweise von 0,35 bis 1,50 Milliäquivalenten von Doppelbindungen pro Gramm Polyester;
- eine Glasübergangstemperatur im Bereich von 40 bis 100°C; und
- eine Schmelzviskosität (Kegel / Platte bei 200°C) von weniger als 100 000 mPa.s.

14. Strahlungshärtbare Pulverzusammensetzung nach einem der vorangehenden Ansprüche 1 bis 13, worin das ungesättigte Gruppe enthaltende Polyesteramid (a.6) aus der Reaktion von Glycidyl(meth)acrylat mit einem Carbonsäuregruppe endständigen Polyesteramid erhalten wird, unter Gewinnung von einem (Meth)acrylolylgruppe enthaltenden Polyesteramid.

15. Strahlungshärtbare Pulverzusammensetzung nach einem der vorangehenden Ansprüche 1 bis 14, worin das für die Herstellung des (Meth)acryloylgruppe endständigen Polyesteramids verwendete Carbonsäuregruppe endständige Polyesteramid aus der Reaktion von Diamin mit einem Carbonsäuregruppe enthaltenden Polyester erhalten wird, wobei der Polyester aus der Reaktion von einer oder mehreren aliphatischen, cycloaliphatischen oder aromatischen Polysäuren mit einem oder mehreren aliphatischen oder cycloaliphatischen Polyolen hergestellt wird.

16. Strahlungshärtbare Pulverzusammensetzung nach einem der vorangehenden Ansprüche 1 bis 15, worin das (Meth)acryloylgruppe enthaltende Polyesteramid **gekennzeichnet ist durch**:
- ein zahlenmittleres Molekulargewicht im Bereich von 800 bis 16000, vorzugsweise 1300 bis 8500;
- Grad an endständiger Ungesättigtheit von 0,15 bis 2,00 und vorzugsweise 0,35 bis 1,50 Milliäquivalente von Doppelbindungen pro Gramm Polyester,
- eine Glasübergangstemperatur im Bereich von 40 bis 70°C und
- eine Schmelzviskosität (Kegel / Platte bei 200°C) von weniger als 50 000 mPa.s.

17. Strahlungshärtbare Pulverzusammensetzung nach einem der vorangehenden Ansprüche 1 bis 16, die 0 bis 20,0 und vorzugsweise 0 bis 10,0 Gewichtsprozent von einem ethylenisch ungesättigten Monomer oder Oligomer (c) umfasst.

18. Strahlungshärtbare Pulverzusammensetzung nach einem der vorangehenden Ansprüche 1 bis 17, worin die Phosphor enthaltende Verbindung (b) die Formel: 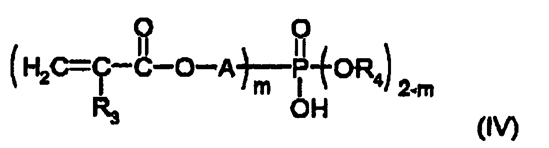 aufweist, worin R₃ ausgewählt ist aus der Gruppe, bestehend aus Wasserstoff, Halogen, einer Alkylgruppe mit 1 bis 8 Kohlenstoffatomen und CH₂=CH-; und R₄ ausgewählt ist aus der Gruppe, bestehend aus Wasserstoff, einer Alkylgruppe mit 1 bis 8 Kohlenstoffatomen und einer Halogenalkylgruppe mit 1 bis 8 Kohlenstoffatomen; A ausgewählt ist aus der Gruppe, bestehend aus -R₅O- und -(R₆O)ₙ-, worin R₅ eine aliphatische oder cycloaliphatische Alkylengruppe, enthaltend 1 bis 9 Kohlenstoffatome, darstellt; R₆ eine Alkylengruppe, enthaltend 1 bis 7 Kohlenstoffatome, darstellt; n eine ganze Zahl von 2 bis 10 ist und m 1 oder 2 ist.

19. Strahlungshärtbare Pulverzusammensetzung nach einem der vorangehenden Ansprüche 1 bis 18, worin die Phosphor enthaltende Verbindung 2-Methacryloyloxyethylphosphat umfasst.

20. Strahlungshärtbare Pulverzusammensetzung nach einem der vorangehenden Ansprüche 1 bis 19, die zusätzlich bis zu 15, vorzugsweise 0,5 bis 8,0, Gewichtsteile von einem Fotostarter für 100 Gewichtsteile der Summe von dem die ethylenisch ungesättigte Gruppe enthaltenden Polymer (a), dem ethylenisch ungesättigten Monomer oder Oligomer (c), falls vorliegend, und der Phosphor enthaltenden Verbindung (b) und gegebenenfalls einen Fotoaktivator umfasst.

21. Strahlungshärtbare Pulverzusammensetzung nach einem der vorangehenden Ansprüche 1 bis 20, die zusätzlich 0 bis 10 Gewichtsteile von mindestens einer Beschichtungseigenschaften modifizierenden Substanz für 100 Gewichtsteile der Summe von dem die ethylenisch ungesättigte Gruppe enthaltenden Polymer (a), dem ethylenisch ungesättigten Monomer oder Oligomer (c), falls vorliegend, und der Phosphor enthaltenden Verbindung (b), umfasst.

22. Pulverlack oder Pulveranstrichstoff, umfassend eine strahlungshärtbare Pulverzusammensetzung nach den Ansprüchen 1 bis 21.

23. Verfahren zum Beschichten eines Gegenstands, wobei die strahlungshärtbare Pulverzusammensetzung nach einem der Ansprüche 1 bis 21 oder ein Pulverlack oder ein Pulveranstrichstoff nach Anspruch 22 auf dem Gegenstand abgeschieden wird, gefolgt von Schmelzen der so erhaltenen Beschichtung und von Strahlungshärten der Beschichtung im geschmolzenen Zustand.

24. Verfahren nach Anspruch 23, wobei das Schmelzen der Beschichtung durch Erhitzen der Beschichtung auf eine Temperatur von 80 bis 150°C, vorzugsweise für einen Zeitraum von 0,5 bis 10,0 Minuten, erzielt wird und/oder das Härten der Beschichtung im geschmolzenen Zustand durch Aussetzen der Beschichtung von W-Strahlung oder beschleunigter Elektronenstrahlung für einen ausreichenden Zeitraum, um eine gehärtete Beschichtung zu bilden, erzielt wird.

25. Gegenstand teilweise oder vollständig beschichtet durch das Verfahren nach einem der Ansprüche 23 oder 24.

## Revendications

1. Composition de revêtement pulvérulente durcissable par rayonnement, qui comprend:
(a) de 80,0 à 99,5 pour cent en poids d'au moins une résine insaturée éthyléniquement ;
(b) de 0,5 à 20,0 pour cent en poids d'au moins un composé phosphoré choisi dans le groupe consistant en l'acide phosphorique et les dérivés organiques de l'acide phosphinique, de l'acide phosphonique ou de l'acide phosphorique, le dérivé organique ayant au moins un radical organique, **caractérisé par** la présence d'au moins un motif d'insaturation éthylénique disposé, de préférence, à l'extrémité ; et
(c) de 0 à 20,0 pour cent en poids d'au moins un monomère ou un oligomère insaturé éthyléniquement,
calculés sur toute la composition de (a), (b) et (c).

2. Poudre durcissable par rayonnement suivant la revendication 1, qui comprend :
(a) de 80 à 99,5 pour cent en poids et, de préférence, de 90 à 99 pour cent en poids d'une résine insaturée éthyléniquement choisie parmi :
(a.1) un polyester amorphe et/ou semi-cristallin contenant un groupe insaturé éthyléniquement ;
(a.2) un copolymère acrylique contenant un groupe insaturé éthyléniquement ;
(a.3) une résine de polyphénoxy contenant un groupe insaturé éthyléniquement ;
(a.4) une résine époxy non aromatique contenant un groupe insaturé éthyléniquement ;
(a.5) des polyuréthanes contenant un groupe insaturé éthyléniquement ;
(a.6) un polyesteramide contenant un groupe insaturé éthyléniquement
utilisée seule ou sous la forme d'un mélange;
(b) de 0,5 à 20 pour cent en poids et, de préférence, de 1 à 10,0 pour cent en poids d'un composé (b) phosphore ayant la formule: 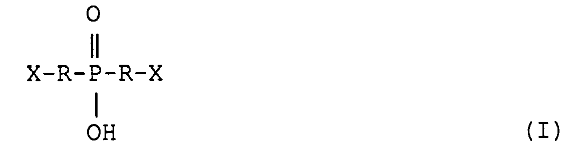 dans laquelle chaque R est identique ou différent et chaque R est indépendamment un radical organique divalent relié directement à l'atome de phosphore par une liaison carbone-phosphore, le radical divalent étant choisi dans le groupe consistant en un radical organique divalent non substitué et en un radical organique divalent ayant au moins un groupe substituant choisi dans la classe consistant en halogène, hydroxyle, amino, radical alkyle contenant de 1 à 8 atomes de carbone et radical aryle ayant au moins un radical contenant au moins un cycle aromatique ; et dans lequel chaque X est identique ou différent et chaque X est indépendamment un groupe fonctionnel choisi dans la classe consistant en hydrogène, hydroxyle, amino, mercapto, halogène et CH₂=C< ; 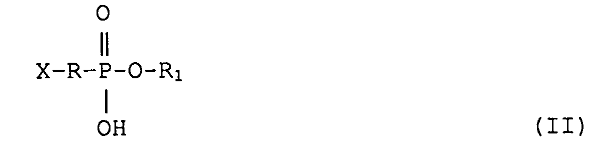 dans laquelle R et X sont tels que définis précédemment ; et R₁ est hydrogène ou -R₂-X, dans laquelle R₂ est un radical organique divalent relié directement au radical oxygène par une liaison carbone-oxygène, le radical R₂ divalent étant choisi dans le groupe consistant en un radical organique divalent non substitué et un radical organique divalent ayant au moins un groupe substituant choisi dans la classe consistant en halogène, hydroxyle, amino, radical alkyle contenant de 1 à 8 atomes de carbone et radical aryle ayant au moins un radical contenant au moins un cycle aromatique et X est tel que défini précédemment ; et 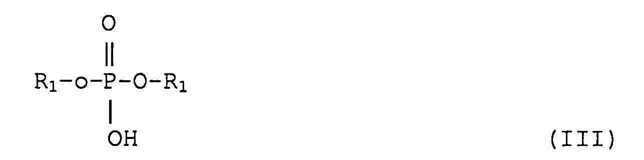 dans laquelle R₁ est comme décrit précédemment
(c) de 0 à 20,0 pour cent en poids d'un monomère ou oligomère (c) insaturé éthyléniquement choisi éventuellement dans le groupe consistant en des composés ayant un groupe (méth)acrylate, un groupe allyle ou un groupe vinyle, l'oligomère étant éventuellement dérivé d'un polyester, d'un polyéther, d'un polycarbonate, d'un polyuréthane ou de copolymères acryliques,
calculés sur toute la composition de (a), (b) et (c).

3. Composition pulvérulente durcissable par rayonnement suivant l'une quelconque des revendications 1 ou 2 précédentes, dans laquelle le polyester (a.1) contenant un groupe insaturé éthyléniquement peut être obtenu par la réaction d'un diisocyanate sur un (méth)acrylate d'hydroxyalkyle et un polyester contenant un groupe hydroxyle ou par la réaction d'un (méth)acrylate de glycidyle sur un polyester contenant des groupes carboxyle pour donner un polyester contenant un groupe (méth)acryloyle.

4. Composition pulvérulente durcissable par rayonnement suivant l'une quelconque des revendications 1 à 3 précédentes, dans laquelle le polyester (a.1) contenant un groupe insaturé éthyléniquement est **caractérisé par** :
- une masse moléculaire moyenne en nombre allant de 1100 à 16000, de préférence de 1300 à 8500 ;
- une viscosité à l'état fondu (cône/plaque à 200°C) inférieure à 50.000 mPa.s ;
- un degré d'insaturation de 0,17 à 4,00 et, de préférence, de 0,35 à 2,50 milliéquivalents de doubles liaisons par gramme de polyester ;
- un point de transition à l'état vitreux allant de 35 à 85°C ; et
- un point de fusion allant de 60 à 150°C et un point de transition à l'état vitreux inférieur à 50°C pour la semi-cristallinité.

5. Composition pulvérulente durcissable par rayonnement suivant l'une quelconque des revendications 1 à 4 précédentes, dans laquelle le copolymère (a.2) acrylique contenant un groupe insaturé éthyléniquement est obtenu à partir de la réaction de:
- un copolymère acrylique ayant des groupes fonctionnels obtenus à partir de 40 à 95 pour cent en mole d'au moins un monomère ayant des groupes acryliques ou méthacryliques, de 0 à 60 pour cent en mole d'un autre monomère insaturé éthyléniquement et de 5 à 60 pour cent en mole d'un monomère insaturé éthyléniquement ayant des groupes fonctionnels aptes à réagir sur un groupe époxy, acide carboxylique, hydroxyle ou isocyanate
- un monomère ayant un groupe insaturé éthyléniquement et un groupe fonctionnel apte à régir sur un groupe acide carboxylique, époxy, isocyanate ou hydroxyle.

6. Composition pulvérulente durcissable par rayonnement suivant l'une quelconque des revendications 1 à 5 précédentes, dans laquelle le copolymère (a.2) acrylique contenant un groupe insaturé éthyléniquement est **caractérisé par**
- une masse moléculaire moyenne en nombre allant de 1000 à 8000, de préférence de 2000 à 6000 ;
- un point de transition à l'état vitreux allant de 45 à 100°C ;
- un degré d'insaturation allant de 0,35 à 3,50 et, de préférence, de 0,5 à 2,5 milliéquivalents de doubles liaisons par gramme de copolymère acrylique ; et
- une viscosité à l'état fondu (cône/plaque à 200°C) de moins de 50.000 mPa.s.

7. Composition pulvérulente durcissable par rayonnement suivant l'une quelconque des revendications 1 à 6 précédentes, dans laquelle la résine (a.3) de polyphénoxy contenant un groupe insaturé éthyléniquement est le produit de réaction d'un acide (méth)acrylique sur une résine de polyphénoxy contenant un groupe glycidyle.

8. Composition pulvérulente durcissable par rayonnement suivant l'une quelconque des revendications 1 à 7 précédentes, dans laquelle la résine (a.3) de polyphénoxy contenant un groupe insaturé éthyléniquement est **caractérisée par**:
- une masse moléculaire moyenne en nombre allant de 500 à 5000, de préférence de 650 à 3500
- un point de transition à l'état vitreux allant de 30 à 80°C
- un degré d'insaturation allant de 0,2 à 6,0 et, de préférence, de 0,5 à 4,5 milliéquivalents de doubles liaisons par gramme de résine de polyphénoxy ; et
- une viscosité à l'état fondu (cône/plaque à 200°C) inférieure à 25.000 mPa.s.

9. Composition pulvérulente durcissable par rayonnement suivant l'une quelconque des revendications 1 à 8 précédentes, dans laquelle la résine (a.4) époxy non aromatique contenant un groupe insaturé éthyléniquement est le produit de réaction d'un acide (méth)acrylique sur une résine aliphatique contenant un groupe glycidyle.

10. Composition pulvérulente durcissable par rayonnement suivant l'une quelconque des revendications 1 à 9 précédentes, dans laquelle la résine époxy non aromatique insaturée éthyléniquement est **caractérisée par**:
- une masse moléculaire moyenne en nombre allant de 450 à 5000, de préférence de 1000 à 3500 ;
- un point de transition à l'état vitreux allant de 30 à 80°C ;
- un degré d'insaturation allant de 0,4 à 4,5 et, de préférence, de 0,5 à 2,5 milliéquivalents de doubles liaisons par gramme de résine ; et
- une viscosité à l'état fondu (cône/plaque à 200°C) inférieure à 20.000 mPa.s.

11. Composition pulvérulente durcissable par rayonnement suivant l'une quelconque des revendications 1 à 10 précédentes, dans laquelle le polyuréthane (a.5) contenant un groupe insaturé est obtenu par la réaction d'un (méth)acrylate d'hydroxyalkyle et d'un polyol sur un polyisocyanate en donnant un polyuréthane contenant un groupe (méth)acryloyle.

12. Composition pulvérulente durcissable par rayonnement suivant l'une quelconque des revendications 1 à 11 précédentes, dans laquelle le polyol utilisé pour la préparation du polyuréthane contenant un groupe (méth)acryloyle est un diol aliphatique ou cycloaliphatique en C₂ à C₁₅, un polyesterpolyol ou un polyétherpolyol.

13. Composition pulvérulente durcissable par rayonnement suivant l'une quelconque des revendications 1 à 12 précédentes, dans laquelle le polyuréthane contenant un groupe (méth)acryloyle est **caractérisé par** :
- une masse moléculaire moyenne en nombre allant de 800 à 15000, de préférence de 1300 à 8500 ;
- un degré d'insaturation terminale de 0,15 à 2,0 et, de préférence, de 0,35 à 1,50 milliéquivalent de doubles liaisons par gramme de polyester ;
- un point de transition à l'état vitreux allant de 40 à 100°C ; et
- une viscosité à l'état fondu (cône/plaque à 200°C) inférieure à 100.000 mPa.s.

14. Composition pulvérulente durcissable par rayonnement suivant l'une quelconque des revendications 1 à 13 précédentes, dans laquelle le polyesteramide (a.6) contenant un groupe insaturé est obtenu par la réaction de d'un (méth)acrylate de glycidyle sur un groupe polyester amide terminé par un groupe acide carboxylique, en donnant un polyesteramide contenant un groupe (méth)acryloyle.

15. Composition pulvérulente durcissable par rayonnement suivant l'une quelconque des revendications 1 à 14 précédentes, dans laquelle le polyesteramide terminé par un groupe acide carboxylique, utilisé pour la préparation du polyesteramide terminé par un groupe (méth)acryloyle, est obtenu par la réaction d'une diamine sur un polyester contenant un groupe acide carboxylique, le polyester étant préparé par la réaction d'un ou plusieurs polyacides aliphatiques, cycloaliphatiques ou aromatiques sur un ou plusieurs polyols aliphatiques ou cycloaliphatiques.

16. Composition pulvérulente durcissable par rayonnement suivant l'une quelconque des revendications 1 à 15 précédentes, dans laquelle le polyesteramide contenant un groupe (méth)acryloyle est **caractérisé par** :
- une masse moléculaire moyenne en nombre allant de 800 à 16000, de préférence de 300 à 8500 ;
- un degré d'insaturation terminale de 0,15 à 2,00 et, de préférence, de 0,35 à 1,50 milliéquivalent de doubles liaisons par gramme de polyester ;
- un point de transition à l'état vitreux allant de 40 à 70°C ; et
- une viscosité à l'état fondu (cône/plaque à 200°C) inférieure à 50.000 mPa.s.

17. Composition pulvérulente durcissable par rayonnement suivant l'une quelconque des revendications 1 à 16 précédentes, qui comprend de 0 à 20,0 et, de préférence, de 0 à 10,0 pour cent en poids d'un monomère ou oligomère (c) insaturé éthyléniquement.

18. Composition pulvérulente durcissable par rayonnement suivant l'une quelconque des revendications 1 à 17 précédentes, dans laquelle le composé (b) phosphoré a la formule : 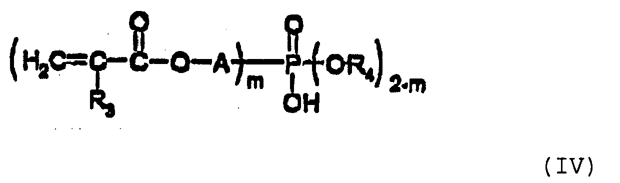 dans laquelle R₃ est choisi dans le groupe consistant en hydrogène, halogène, un groupe alkyle ayant de 1 à 8 atomes de carbone, et CH₂=CH- ; et R₄ est choisi dans le groupe consistant en hydrogène, un groupe alkyle ayant de 1 à 8 atomes de carbone et un groupe haloalkyle ayant de 1 à 8 atomes de carbone ; A est choisi dans le groupe consistant en -R₅O- et -(R₆O)ₙ-, dans laquelle R₅ est un groupe alkylène aliphatique ou cycloaliphatique contenant de 1 à 9 atomes de carbone ; R₆ est un groupe alkylène contenant de 1 à 7 atomes de carbone ; n est un nombre entier de 2 à 10 et m est 1 ou 2.

19. Composition pulvérulente durcissable par rayonnement suivant l'une quelconque des revendications 1 à 18 précédentes, dans laquelle le composé phosphoré comprend du phosphate de 2-méthacryloyloxyéthyle.

20. Composition pulvérulente durcissable par rayonnement suivant l'une quelconque des revendications 1 à 19 précédentes, qui comprend, en outre, jusqu'à 15 et, de préférence, de 0,5 à 8,0 parties en poids d'un photo-amorceur pour 100 parties en poids du total du polymère (a) contenant un groupe insaturé éthyléniquement, du monomère ou oligomère (c) insaturé éthyléniquement, s'il y en a, et du composé (b) phosphore et, éventuellement, d'un photo-activateur.

21. Composition pulvérulente durcissable par rayonnement suivant l'une quelconque des revendications 1 à 20 précédentes, qui comprend, en outre, de 0 à 10 parties en poids d'au moins une substance modifiant les propriétés de revêtement et 100 parties en poids du total du polymère (a) contenant un groupe insaturé éthyléniquement, du monomère ou oligomère (c) insaturé éthyléniquement, s'il y en a un, et du composé (b) phosphoré.

22. Vernis pulvérulent ou peinture pulvérulente comprenant une composition pulvérulente durcissable par rayonnement suivant les revendications 1 à 21.

23. Procédé de revêtement d'un objet, dans lequel on dépose sur l'objet une composition pulvérulente durcissable par rayonnement suivant l'une quelconque des revendications 1 à 21 ou un vernis pulvérulent ou une peinture pulvérulente suivant la revendication 22, puis on fait suivre de la fusion du revêtement ainsi obtenu et du durcissement par rayonnement du revêtement à l'état fondu.

24. Procédé suivant la revendication 23, dans lequel on effectue la fusion du revêtement en portant le revêtement à une température de 80 à 150°C, de préférence pendant une durée de 0,5 à 10,0 minutes et/ou on effectue le durcissement du revêtement à l'état fondu en exposant le revêtement à du rayonnement UV ou à des faisceaux d'électrons accélérés pendant une durée qui est suffisante pour former un revêtement durci.

25. Objet revêtu en tout ou partie par le procédé suivant l'une quelconque des revendications 23 ou 24.
